(19) Europäisches Patentamt
European Patent Office
Office européen des brevets

(11) **EP 4 614 937 A1**

## (12) EUROPEAN PATENT APPLICATION

(43) Date of publication:
**10.09.2025 Bulletin 2025/37**

(21) Application number: **25161873.2**

(22) Date of filing: **05.03.2025**

(51) International Patent Classification (IPC):
**H04L 47/125** (2022.01)     **H04L 47/17** (2022.01)

(52) Cooperative Patent Classification (CPC):
**H04L 47/125; H04L 47/17**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.03.2024 US 202418597535**

(71) Applicant: **Google LLC**
**Mountain View, CA 94043 (US)**

(72) Inventors:
• **TOWLES, Brian Patrick**
**Mountain View, California 94043 (US)**
• **LUO, Yixin**
**Mountain View, California 94043 (US)**

(74) Representative: **Betten & Resch**
**Patent- und Rechtsanwälte PartGmbB**
**Maximiliansplatz 14**
**80333 München (DE)**

## (54) HYBRID COMPUTING NETWORK TOPOLOGIES FOR WORKLOAD EXECUTION

(57)     Methods, systems, and apparatus, including computer-readable storage media for hybrid network topologies that flexibly support diverting bandwidth for indirect connections to bandwidth for direct connections for computing devices arranged in the hybrid network topology, on a workload-by-workload basis. The hybrid network topology described herein arranges computing devices into groups and connects neighboring computing devices to common switches based on the dimensionality of the computing device groups. Indirect connections connecting devices in different groups through a common switch can be at least partially diverted to form an additional direct connection between the neighboring computing devices in the same group. The network of nodes can divert bandwidth, for example based on executing different workloads with different bandwidth requirements for executing the workload locally, e.g., within a group of nodes, versus globally, e.g., across different groups of nodes.

FIG. 2

**Description**

BACKGROUND

Computing devices on a network are often connected to one another in a network topology, which represents how the different devices are arranged logically and/or physically in the network. Devices are networked together to improve computational efficiency for complex and time-consuming workloads, such as training a machine learning model, by distributing the workloads across available devices. Topologies are often logically divided into different layers, with different arrangements of devices and links represented at each layer. Devices executing a workload may be connected to other processing devices or to network devices, like network switches. Example network topologies include torus topologies and fat-tree topologies.

A fat-tree topology implements switches for routing traffic across different computing nodes of the topology. Layers of switches in a network arranged in a fat-tree topology are costly, especially at lower or base layers of the tree, because those switches support the full bandwidth of the entire network.

"Flattening" these topologies reduces this overhead, but at the cost of some generality. When a topology is flattened, some switches are eliminated, reducing the overall number of links between different devices across the network. To avoid performance loss in a flattened topology, traffic patterns executed on the network maintain some communication locality to avoid a loss of performance relative to the fat-tree. Locality can refer to processors connected to a flattened group communicating more frequently or intensely than with processors outside their group.

Some machine learning workloads are executed according to different techniques that require different amounts of bandwidth between computing devices and switches. Networks with "flattened" topologies or that otherwise have predetermined and fixed connections between switches and processing devices will therefore always be inefficient in processing at least some machine learning workloads. These networks become imbalanced for at least some of the workloads executed, reducing network efficiency due to bandwidth bottlenecks among the different device connections.

BRIEF SUMMARY

The technology generally relates to hybrid network topologies that are configured to divert bandwidth for indirect connections to bandwidth for direct connections dynamically, depending on the demands of a given workload. Demands can shift between workloads, as well as within a workload itself, for example at different points of execution of the workload. A computing network arranged in a hybrid network topology may achieve flexible bandwidth benefits of network topologies flattened at their base layers, while avoiding or reducing network inefficiencies of network topologies that are not flattened at their base layers.

The hybrid network topology arranges computing devices into groups and connects neighboring computing devices to common switches based on the dimensionality of the computing device groups. Indirect connections connecting devices in different groups through a common switch can be at least partially diverted to form an additional direct connection between the neighboring computing devices in the same group. The network of nodes can divert bandwidth, for example based on executing different workloads with different bandwidth requirements for executing the workload locally, e.g., within a group of nodes, versus globally, e.g., across different groups of nodes. Within the execution of a workload, the network can divert bandwidth at different points in time, in response to changing workload demands. The ratio of direct connection bandwidth and indirect connection bandwidth used can be adjusted in response to different workloads performing differently under different conditions.

A network can have groups of computing devices and network devices. Network devices, such as switches, connect different computing devices to each other. Connections formed using switches to connect computing devices of different groups are referred to as indirect connections. Computing nodes can include devices or processors, e.g., CPUs, GPUs, and/or ASICs, such as Tensor Processing Units (TPUs), configured to receive data corresponding to a workload and execute operations for processing the data. Computing nodes can also be connected directly to other computing nodes, referred to as direct connections. Direct connections may also be referred to as node-to-node connections or fixed links, while indirect connections may also be referred to as node-to-switch connections or flexible links.

A hybrid network topology includes both direct and indirect connections that can be selectively used on a workload-by-workload basis, to improve execution of a workload on a network of computing nodes implemented in the hybrid network topology. Factors in executing a workload can vary the efficiency of leveraging more bandwidth on direct connections versus indirect connections of a network. The locality of the traffic pattern of data moving as part of executing a workload, for example, may lead to a preference of high direct connection bandwidth within a group of computing nodes, as opposed to indirect bandwidth between one group and other groups of computing nodes in a network. However, because different workloads exhibit different performance characteristics, relying on only high direct connection bandwidth may lead to underperformance of those workloads on the same network.

Aspects of the disclosure provide for a pipelined approach for implementing different collective patterns of operations on hybrid network topologies. Depending on the collective pattern implemented and the dimensions of the computing node groups selected to perform the collective pattern, a network of devices implementing a hybrid network topology can transmit data in accordance with different ratios of direct connection to indirect connection bandwidths. The different ratios of bandwidth are achieved by the network repurposing indirect connections as direct connections between neighboring nodes in the same group.

Aspects of the technology can provide for at least the following technical advantages. A distributed system for processing workloads can flexibly allocate bandwidth in response to the type of workload processed. The system implementing the hybrid network topology can avoid a fixed bandwidth ratio between direct and indirect connections, adjusting the ratio as needed to perform different workloads more efficiently. The hybrid network topologies can achieve benefits in bandwidth allocation of a fat-tree topology, while avoiding the first layer of switches in a traditional fat-tree and its associated latency and costs. The hybrid network topologies can address traffic-dependent load imbalance by allowing computing node-to-switch indirect connections to also act as node-to-node direct connections, depending on traffic patterns. In addition, the hybrid network topology can fully emulate n-dimensional torus topologies, allowing for incremental migration from software libraries for managing workloads on devices organized as a torus topology, to managing workloads on devices organized as a hybrid network topology described herein.

BRIEF DESCRIPTION OF THE DRAWINGS

FIG. 1 is a block diagram of an example workload execution system implementing a computing network arranged in a hybrid network topology according to aspects of the disclosure.

FIG. 2 is a block diagram of a computing network arranged according to an example hybrid network topology for two groups of computing nodes, with each group having two dimensions, according to aspects of the disclosure.

FIG. 3A is a block diagram illustrating indirect connection bandwidth out of a computing group of a hybrid network topology, according to aspects of the disclosure.

FIG. 3B is a block diagram illustrating indirect connections of the computing group being diverted to the group as additional direct connection bandwidth, according to aspects of the disclosure.

FIG. 4A is a block diagram illustrating a logical view of an example computing network executing a first collective pattern of operations and a second collective pattern of operations, according to aspects of the disclosure.

FIG. 4B is a block diagram illustrating a logical view of egress bandwidth utilization for the first collective pattern of operations on the example computing network shown in the logical view of FIG. 4A, according to aspects of the disclosure.

FIG. 4C is a block diagram illustrating a logical view of egress bandwidth utilization for the second collective pattern of operations on the example computing network shown in the logical view of FIG. 4A, according to aspects of the disclosure.

FIG. 5X is a block diagram of an example hybrid network topology along the *x*-dimension for two groups of computing nodes, each having three dimensions, according to aspects of the disclosure.

FIG. 5Y is a block diagram of an example hybrid network topology along the y-dimension for the two groups of computing nodes, according to aspects of the disclosure.

FIG. 5Z is a block diagram of an example hybrid network topology along the z-dimension for two groups of computing nodes, according to aspects of the disclosure.

FIG. 6 is a block diagram illustrating the connections of a computing node in the hybrid network topology shown with reference to FIGs. 5X-5Z, according to aspects of the disclosure.

FIG. 7 is a flow diagram of an example process for processing a workload on a hybrid network topology, according to aspects of the disclosure, according to aspects of the disclosure.

FIG. 8 is a flow diagram of an example process for executing a multi-stage pipeline of collective patterns of operations, for processing a workload on a hybrid network topology, according to aspects of the disclosure.

FIG. 9 is a block diagram illustrating one or more model architectures associated with a machine learning workload, such as for deployment in a data center that houses hardware accelerators arranged in a hybrid network topology and aspects of the disclosure.

FIG. 10 is a block diagram of an example computing environment for implementing the workload execution system, according to aspects of the disclosure.

DETAILED DESCRIPTION

This disclosure relates to methods, systems, and apparatus, including computer-readable storage media for hybrid network topologies that flexibly support diverting bandwidth for indirect connections to bandwidth for direct connections for computing devices arranged in the hybrid network topology, on a workload-by-workload basis. The hybrid network topology described herein arranges computing devices into groups and connects neighboring computing devices to common switches based on the dimensionality of the computing device groups. Indirect connections connecting devices in different groups through a common switch can be at least partially diverted to form an additional direct connection between the neighboring computing devices in the same group. The network of nodes can divert bandwidth, for example based on executing different workloads with different bandwidth requirements for executing the workload locally, e.g., within a group of nodes, versus globally, e.g., across different groups of nodes.

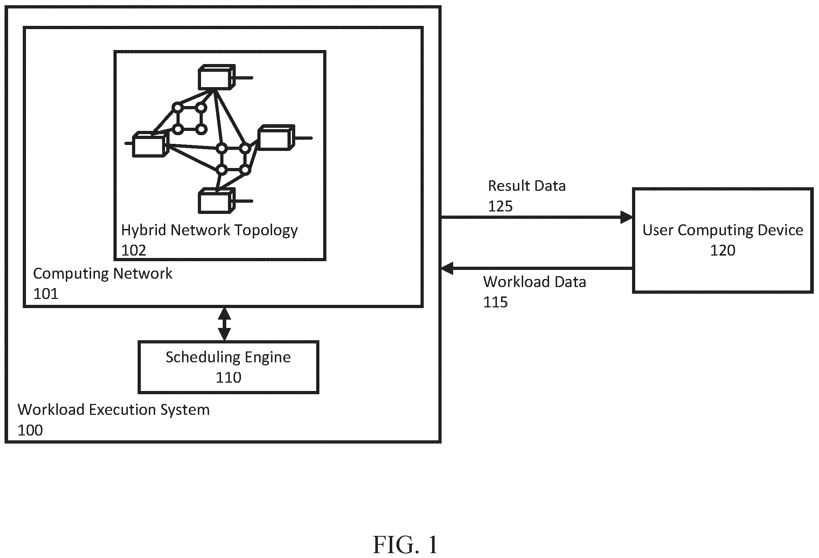

FIG. 1 is a block diagram of an example workload execution system 100 implementing a computing network 101 arranged in a hybrid network topology. The system 100 can include a scheduling engine 110 configured to receive workload data 115 from a user computing device 120 and generate a result 125 in response to the received workload data 115.

The workload execution system 100 can be implemented as part of a computing platform configured for executing a variety of different workloads. A workload can include a specification of operations to perform, as well as data for performing the specified operations. For example, a machine learning workload may include operations for training or executing a machine learning model, such as a neural network. Data for performing the workload can include a model architecture for the machine learning model, including model parameter values and hyperparameter values. In some examples, the system 100 receives workload data 115 for performing a workload, as well as a selection of the type of operations to execute on the received workload.

The system 100 can receive the workload at the scheduling engine 110. The scheduling engine 110 is configured to transmit and schedule the transmission of the workload for execution on the computing network 101. The scheduling engine 110 can receive multiple different workloads from multiple different computing devices, not pictured in FIG. 1. As part of scheduling and transmitting the workload, the scheduling engine 110 can apply any of a variety of ranking or scheduling procedures, which may also factor in characteristics of the source of the workload for prioritizing what workload gets scheduled with what computational processing budget. For example, some workloads may be deemed "high priority" and precede other workloads in a scheduling queue implemented by the scheduling engine 110, even if the scheduling queue is generally arranged as a first in first out (FIFO) queue. In some examples, the scheduling engine 110 may be implemented using one or more processors or computing nodes that also form part of the computing network 101.

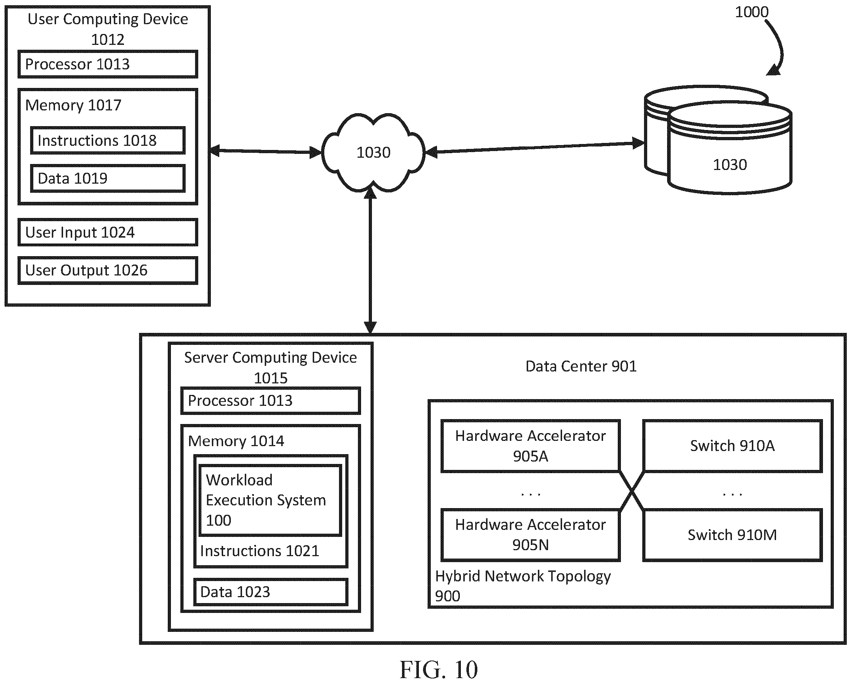

The user computing device 120 can be any type of device, e.g., laptop, mobile device, server device, desktop computer, etc., configured to interact with the workload execution system 100. The exchange of data between the user computing device 120 and the workload execution system 100 can be performed over a user interface, e.g., using an API, a web application, a standalone software application, etc. The user interface can be at least partially implemented on one or both of the workload execution system 100 and the user computing device 120. The description herein and with reference to FIG. 10 provides other example configurations of the workload execution system 100 and the user computing device 120.

The computing network 101 is arranged in a hybrid network topology 102. A hybrid network topology includes both direct and indirect connections that can be selectively used on a workload-by-workload basis, to improve execution of a workload of the computing network 101 implemented in the hybrid network topology 102. The hybrid network topology 102 can have multiple dimensions and include various other topologies for groups of computing devices and other layers of the computing network 101, including hypercubes and fat-trees. The computing network 101 implemented in the hybrid network topology 102 can avoid a fixed bandwidth ratio between direct and indirect connections, adjusting the ratio as needed to perform different workloads more efficiently.

The computing network 101 can include multiple different computing nodes and network devices, such as network switches or routers. Computing nodes can include devices or processors, e.g., CPUs, GPUs, and/or ASICs such as TPUs, configured to receive data corresponding to a workload and execute operations for processing the data. Network switches are an example of a type of network device that can be implemented as part of the computing network 101, for routing traffic across the computing network 101 to different computing nodes. Examples of arrangements of the computing network 101 in a hybrid network topology follow.

The workload execution system 100 can execute one or more workloads on the computing network 101, to generate corresponding result data 125. Result data 125 can be communicated to the user computing device 120 or another computing device. In some examples, result data 125 may be input to a downstream process, which may be executed on the workload execution system 100 or executed by another system of one or more computing devices in one or more physical locations.

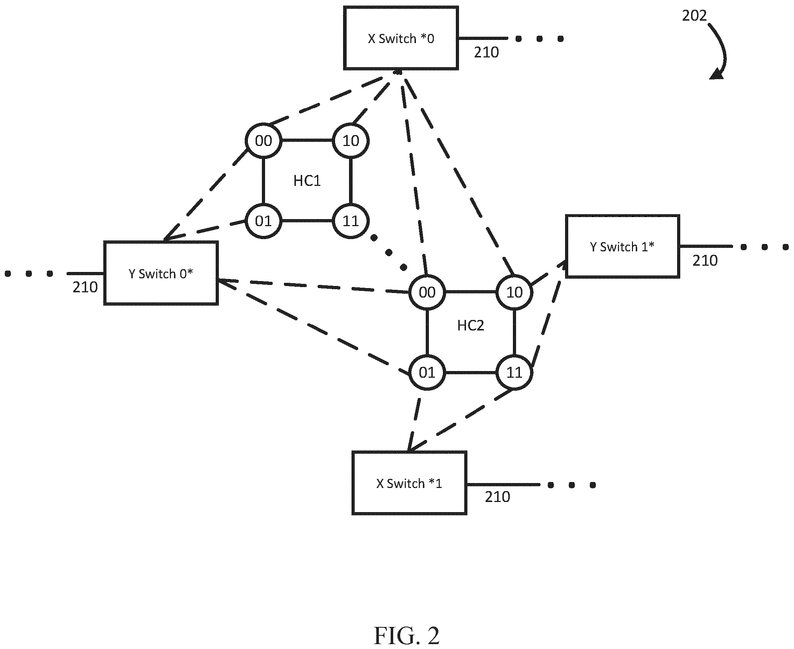

FIG. 2 is a block diagram of a computing network 202 arranged in an example hybrid network topology for two groups of computing nodes, with each group having two dimensions. The base or first layer of the hybrid network topology can include groups of computing nodes with direct connections to their neighbors. For example, each group at the base of the hybrid network topology can be an n-dimensional hypercube, where n is the dimensionality of the hypercube. The groups in FIG. 2 are labeled HC1 and HC2, and it is understood that in different examples the computing network 202 can include more or fewer groups arranged as hypercubes or in other topologies. Each hypercube can include $2^n$ computing

nodes.

Each computing node in a group can form a direct connection to each of its n neighbors in the hypercube. As another example, a 3-dimensional hypercube includes eight ($2^3$) computing nodes, each computing node forming a direct connection to three neighboring computing nodes. The dimensions of a 3-dimensional hypercube can be labeled, e.g., as the x-dimension, the y-dimension, and the z-dimension. Although groups of computing nodes are described as arranged in n-dimensional hypercubes, with each computing node connected to n neighboring computing nodes, in some examples each computing node may be connected to more or fewer than n computing nodes in the same group. Other examples include an n-dimensional torus, a twisted torus, and other topologies in which the nodes are fully-connected. Any topology that supports both the use of direct and indirect connections described here can be used as a topology for a group of computing nodes.

In FIG. 2, computing nodes are indicated by circles with corresponding labels. For example, group HC1 includes computing node 00, computing node 01, computing node 10, and computing node 11. Group HC2 also includes computing nodes labeled relative to the group. Therefore, for example, computing node 00 in group HC2 is distinct from computing node 00 in group HC1. Group HC2 also includes computing node 01, computing node 10, and computing node 11.

Different connections in the computing networks can be implemented according to different approaches. For example, two computing nodes may be connected over a physical link or cable. The physical link or cable can connect two computing nodes within the same device or can connect the two computing nodes while in different physical locations, e.g., different server racks of a data center. In some examples, a connection is over an on-board interconnect, for example two computing nodes coupled to the same board or substrate implementing a physical interconnect technology, such as PCIe. In some examples, connections between computing nodes may be wireless, e.g., over a WiFi or cellular connection. Connections between neighboring computing nodes in the group HC1 and group HC2 in FIG. 2 are direct connections, indicated by solid lines between the computing nodes.

Each connection can have a corresponding maximum or average bandwidth for which data can travel along the connection. The connection can support different payloads of data corresponding to different workloads being transmitted along the same connection, e.g., at the same time or in an alternating fashion. For example, a connection may have 80% of its bandwidth allocated for transferring data corresponding to one workload, and the remaining 20% of its bandwidth allocated for transferring data corresponding to another workload.

FIG. 2 illustrates x switch *0, x switch *1, y switch 0*, and y switch 1*. The x and y switches can form part of a second layer of a hybrid network topology, after the base layer including the computing nodes. It is understood, however, that in some examples, the switches and computing nodes described herein can logically form a single base layer of the hybrid network topology. Each of the switches have a corresponding label, e.g., *0. The '*' is a wildcard label representing either '0' or '1,' and is used for ease of description to identify which of the computing nodes are connected to which switch. For example, y switch 0* has a wildcard in the second position, indicating that the switch connects to computing node 00 and computing node 01 of group HC1, and computing node 00 and computing node 01 of group HC2. The switches in FIG. 2 are examples of network devices that may be used for connecting computing nodes from different groups, to allow data traffic to flow globally, or between groups.

Although shown as separate devices, in some examples the computing nodes and the switches shown in the figures, e.g., FIG. 2, may be combined as the same device, and/or implemented on the same board or substrate. In some examples, computing nodes may implement an additional switch or other network device for routing traffic inbound and/or outbound from or to connections of the computing nodes.

In some examples, the switches *0, 0*, 1*, and *1 can be configured for various data traffic flow processing, e.g., load balancing, scheduling data transfer, congestion control, etc. A switch may include one or more ports or another interface for receiving and transmitting computing nodes to and from various computing nodes connected to the switch. The switch may implement some form of hardware or software acceleration to facilitate or accelerate data transmission in the computing network.

Connections between a computing node and a switch can be implemented with reference to direct connections between computing nodes, e.g., as physical links or cables, over a board or substrate, and/or wirelessly. A connection between a computing node and a switch is referred to as an indirect connection, for example because the connection indirectly connects two computing nodes of different groups through the switch. Indirect connections are shown in FIG. 2 as dashed lines. Generally, direct connections between computing nodes transmit more data over less time than indirect connections between computing nodes and switches. Indirect connections, however, are more flexible for transmitting data to other groups, for example to broadcast local results computed at a given group.

The switches can also include additional connections 210 to switches and/or computing nodes at higher levels of the computing network 202. The computing network 202 can be arranged in different network topologies at the higher levels, e.g., levels past the first and second layer in examples in which the computing nodes and switches are part of separate layers, or levels past the first layer in examples in which the computing nodes and switches logically share the same layer. For example, higher levels of the hybrid network topology can be formed in a fat-tree or folded-Clos topology. When lower levels of the hybrid network topology include groups arranged as hypercubes and when higher levels of the hybrid network topology are arranged as a tree, the overall hybrid network topology can be described as a hierarchy of trees and hypercubes.

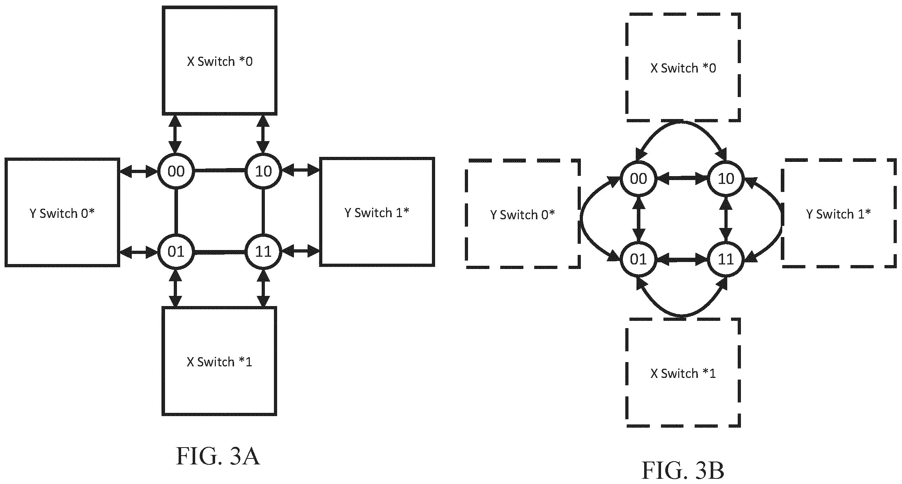

The computing network 202 is configured to have some fraction of the egress bandwidth, e.g., bandwidth from indirect connections leaving a computing group HC1 or computing group HC2, be diverted to the y switches and x switches. The range of fractions can be from no diversion of the egress bandwidth (e.g., zero percent), all the way to maximum utilization of the egress bandwidth (e.g., 100 percent). The computing network 202 is configured to have all of the indirect connection bandwidth be diverted back to the groups, as described in more detail with respect to FIG. 3A and FIG. 3B.

Aspects of the disclosure provide for balancing direct and indirect connections, not only by the computing network being configured to divert bandwidth, but also at least because multiple computing nodes are connected to the same switch. Computing nodes are connected to a quantity of switches larger than or equal to the dimensionality of the group corresponding to each computing node. As a result, each computing node is connected to each of its neighboring computing nodes, no matter in which dimension data needs to be transmitted within the computing node. Each computing node has a corresponding indirect connection to its neighboring computing nodes that can be diverted as needed to form an additional direct connection. In executing some workloads in which the additional direct connection bandwidth is not necessary, e.g., because of a relatively lower amount of local or intra-group data traffic, each computing node is configured to egress data from the group, as needed.

Aspects of the disclosure avoid bottlenecking at a group of computing nodes as in approaches in which only a single computing node is configured to egress data from the group, while at the same time allowing the additional node-to-switch connections to be repurposed for adding additional local bandwidth to a computing group. Because each computing node is connected to at least one switch for each dimension, different sets of operations can be executed along the different dimensions of the group, with each set of operations potentially optimized for different ratios of direct connection to indirect connection bandwidths.

TABLE 1 is a table describing characteristics of the computing network 202 arranged in the example hybrid network topology. The left-hand side of TABLE 1 describes the value on the right-hand of the table and also includes an example formula for calculating the value based on predetermined information about the computing network 202. Example information includes the number of groups $H$ the computing nodes are arranged in and the dimensionality of each group $n$. In some examples, different example hybrid network topologies are configured to divert direct connection bandwidth to indirect connection bandwidth, but may implement, for example, different quantities of groups, different group network topologies, different dimensionalities for the group network topologies, different quantities of computing nodes and/or switches, etc.

TABLE 1

| | |
|---|---|
| Number of groups ($H$) | 2 |
| Dimensionality of each group ($n$) | 2 |
| Number of computing nodes per group ($2^n$) | 4 |
| Number of computing nodes in total ($H * 2^n$) | 8 |
| Number of switches ($n * 2^{n-1}$) | 4 |
| Number of connections per node ($n$ direct connections + $n$ indirect connections) | 4 |

FIGs. 3A-3B show an example of how egress bandwidth can be diverted by diverting indirect connection bandwidth back to the computing group. FIG. 3A is a block diagram illustrating indirect connection bandwidth out of a computing group of a hybrid network topology. In FIG. 3A, the utilized connections are indicated with lines with arrows on both ends. In FIG. 3A, all of the data transmitted by the computing nodes 00, 01, 10, and 11 are diverted out of the computing group to the x-dimension switches and y-dimension switches.

FIG. 3B is a block diagram illustrating indirect connections of the computing group being diverted to the group as additional direct connection bandwidth. For some approaches in executing a workload, more bandwidth within the group is needed for more efficient execution. Because the hybrid network topology connects neighboring computing nodes to a common switch, those node-to-switch connections can instead act as a direct connection between the neighboring computing nodes.

As shown by the lines with arrows on each end in FIG. 3B, all connections are used for communicating local data traffic within the computing group. Switches provide additional connections and their corresponding bandwidth to be made available for executing the workload according to collective operations that are bottlenecked more heavily on intra-group data traffic. The x-dimension switches and y-dimension switches can be configured to automatically route traffic from one computing node to its neighboring computing node along the same dimension. The x-dimension switches and the y-dimension switches are shown with dashed lines to indicate that these switches are routing incoming traffic back to the computing group at a neighboring computing node. Bypassing the switches to divert traffic from one computing node to a neighboring computing node allows the indirect connections of the computing nodes to the switches to act as additional direct connections between the neighboring computing nodes.

FIG. 3A shows one possible configuration, in which all the data transmission is sent from the computing group, while FIG. 3B shows another possible configuration, in which all the indirect connection bandwidth is diverted for local group processing, in conjunction with the direct connections already connecting the computing nodes of the group. Put another way, FIG. 3A shows an example of a direct to indirect connection bandwidth ratio of 0:1, while FIG. 3B shows an example of a direct to indirect connection bandwidth of 1:0.

Aspects of the disclosure provide for a computing network configured to execute workloads according to ratios of indirect to direct connection bandwidth between and including 1:0 and 0:1, e.g., 1:3, 1:1, 1;2, etc. Aspects of the disclosure provide for the adjustment of the direct to indirect connection bandwidth on a per workload basis, as well as on a dimension-by-dimension basis. For example, different workloads may execute along different dimensions and connections along those dimensions, according to different ratios of indirect to direct connection bandwidth that is determined to result in more efficient execution of those workloads. In some examples, the proper ratio of bandwidth is based on different collective patterns of operations the system 100 is configured to perform for executing different workloads more efficiently.

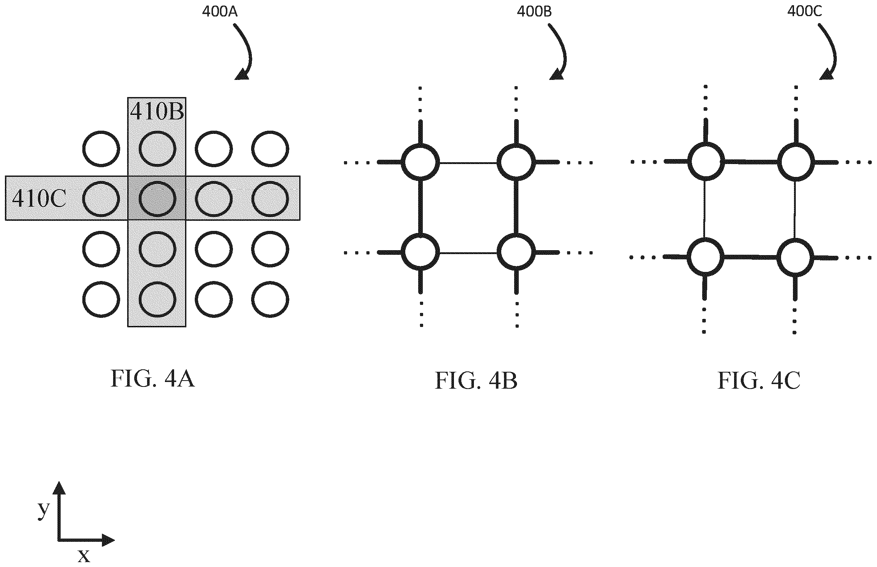

FIG. 4A is a block diagram illustrating a logical view of an example computing network 400A executing a first collective pattern of operations 410B and a second collective pattern of operations 410C. Operations performed as part of improving or optimizing workload execution can be referred to generally as collective operations or collective patterns of operations. As part of executing a collective pattern of operations, subgroups of computing nodes along the same or different computing groups of a computing network can perform one or more operations concurrently or in a manner distributed across different computing nodes.

Example collective patterns include various forms of parallelism employed across a distributed network of computing devices for accelerating machine learning workloads. Example forms of parallelism include sequence parallelism and model parallelism, but it is understood that any collective pattern of operations typically performed on a distributed set of computing nodes may be implemented. Example workloads or portions of workloads that can benefit from collective pattern execution can include embedding calculation, forward and backward operations for training a model, e.g., using backpropagation with gradient descent, and sharding, e.g., weight sharding or model sharding across different dimensions of network traffic. Multiple patterns may be employed for the same workload, for example as the workload shifts to different operations benefitting more or less from different collective patterns.

Different collective patterns of operations can be mapped to different subgroups by the system 100. For example, and as shown with reference to FIG. 4A, the scheduling engine 110 may map a collective pattern 410A along the *x* dimension of the example computing network 400A, and another collective pattern 410B along the y dimension of the example computing network 400A.

FIG. 4B is a block diagram illustrating a logical view 400B of egress bandwidth utilization for the first collective pattern of operations 410A on the example computing network shown in the logical view 400A of FIG. 4A. The heavily bolded lines of the logical view 400B along the y dimension indicate connection utilization for transmitting data from the computing nodes to corresponding switches. In the logical view 400B, six out of eight connections (75%) are utilized when executing the collective pattern 410B.

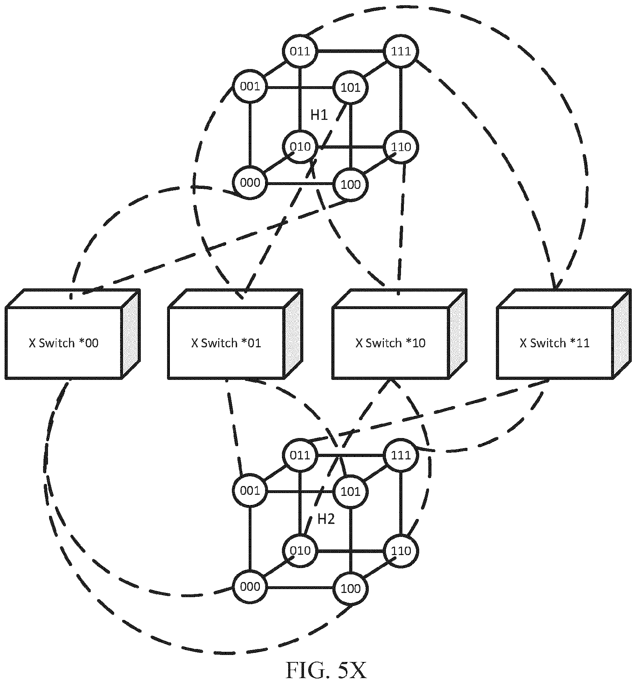

FIG. 4C is a block diagram illustrating a logical view 400C of egress bandwidth utilization for the second collective pattern of operations on the example computing network shown in the logical view 400A of FIG. 4A. The heavily bolded lines of the logical view 400C along the y dimension indicate connection utilization for transmitting data from the computing nodes to corresponding switches. In the logical view 400C, six out of eight connections (75%) are utilized when executing the collective pattern 410C. Connection utilization can increase up to 100% overall, with higher group dimensions used in the computing network. FIGs. 5X-5Z illustrate an example hybrid network topology when the individual computing groups have a dimensionality of three.

Computing networks arranged in the hybrid network topologies can fully emulate an n-dimensional torus topology, achieving the same or greater bandwidth for all collective patterns of operations as with a torus. In some examples and referring back to FIG. 1, a workload execution system 100 may be configured to schedule and arrange operations on a computing network based on input received using a software library or API. In some cases, the software library or API may only support ring-based collective patterns, e.g., for execution on a computing network arranged in a torus topology. In those cases, aspects of the disclosure provide for the computing network to be arranged in a hybrid network topology, which is compatible with ring-based collective patterns. This provides for potential incremental migration of the software libraries and APIs to eventually implement specific collective patterns for hybrid network topologies, while still remaining backwards compatible.

Aspects of the disclosure provide for a pipelined approach for implementing different collective patterns on hybrid network topologies. Depending on the collective pattern implemented and the dimensions of the computing node groups selected to perform the collective pattern, a network of devices implementing a hybrid network topology can transmit data in accordance with different ratios of direct connection to indirect connection bandwidths.

In the first phase, a collective pattern of operations is performed at the intra-group level, e.g., within a group of computing nodes. In the first phase, either direct connections, or indirect connections employed as directed connections are used. In a second phase, a collective pattern of operations is performed at the inter-group level, e.g., ring-based collective patterns between groups of computing nodes. In the second phase, only indirect connections are used, for communicating between groups of computing nodes. In some examples, the inter-group and intra-group operations are reversed in phase, e.g., inter-group operations using only the indirect connections in the first phase, intra-group operations using the direct connections and possibly the indirect connections in the second phase. The examples that follow assume the first phase include intra-group operations.

The level of collective operation at each phase can vary, and operations at different phases may be associated with executing the same workload, and/or be associated with different workloads at different stages of execution. Operations of the collective pattern of operation can be executed across multiple phases. For example, one piece of the collective operations can be processed in the first phase (e.g., intra-group operation), while the next piece can be processed in the second phase (e.g., inter-group operation). The first piece can then move on to the second phase, and another piece of the collective operation can move into the first phase. A piece of the operation can generally refer to a subset of the operations needed to perform the collective pattern. Different phases for collective patterns for the same or different workloads may also be performed concurrently, e.g., with bandwidth for some connections being distributed for use in executing different phases of the pipeline.

An example of collective patterns executed on the first and second phase can include a reduce-scatter operation (also referred to as ReduceScatter): values are reduced within each computing group in the first phase, and the reduced values are communicated or scattered across other computing groups in the second phase. As another example, collective patterns executed on the first and second phase can include an all-gather operation (also referred to as an AllGather): values are combined or gathered in the first phase and then distributed to other groups in the second phase. Other collective patterns for processing and communicating data can also be implemented for processing data in the first phase of the pipe-line, and broadcasting or otherwise communicating the processed data across groups of a computing network implementing the hybrid network topology, in the second phase.

Operations in the first and second phases can be executed concurrently or in a staggered fashion, in some examples. For example, for multiple workloads executed using a ReduceScatter, the computing nodes are configured to perform operations for the first phase of one workload in parallel with the second phase of another workload. The exact scheduling and order of operations can be determined by the system 100, e.g., by the scheduling engine 110. The scheduling and order of operations can be determined, for example, based on different heuristics or techniques for scheduling different collective patterns of operations on the computing network 101.

The relative amount of bandwidth for the first and the second phase can depend on the number of dimensions used in the first phase. For example, for groups with a dimensionality of three, one, two, or all three dimensions and their corresponding direct connections between neighboring computing nodes may be used to transmit data between computing nodes. The system 100 can determine the ratio of bandwidth to use during both phases, to reduce or eliminate bottlenecking.

For example, if the computing network 101 is tasked to perform a ReduceScatter, each computing node in the computing network 101 may receive D bytes to reduce in the first phase. If each computing node reduces the $D$ bytes by a factor $2^n$, where $n$ is the dimensionality of each group in the computing network 101, then each computing nodes sends out

$$D - \frac{D}{2^n} = \frac{D(2^n - 1)}{2^n}$$

. $2^n$ is the total number of other computing nodes in the network and the subtraction of $\frac{D}{2^n}$ is the reduced data each computing node does not need to transmit, reflecting its own copy of the reduced value. The data has been reduced by a factor $2^n$, so in the second phase at most $\frac{D}{2^n}$ data is communicated over all of the connections. To balance bandwidth in this example, the first phase needs a factor of $2^n - 1$ more bandwidth than the second phase.

TABLE 2 shows different connection loads for different collective patterns implemented in the pipe-lined approach described herein and using the $2^n - 1$ bandwidth factor described above. In this example, the groups of the network have three dimensions and the collective pattern is a reduce-scatter. The loads of each connection are normalized to the bandwidth of a single connection, although in different examples different connections between nodes and switches may have different maximum bandwidths. In this example and in other examples unless otherwise indicated, the first phase collective pattern is a reduction, and the second phase collective pattern is a scatter of the reduced values.

The loads described assume equal capacity for each link. In examples in which links had unequal capacity, the distribution of each load can vary to account for the difference.

TABLE 2

| Collective pattern | Link load to support 1 link of collective bandwidth (load on Xs/Ys/Zs divided into first + second phase) | | | | | |
|---|---|---|---|---|---|---|
| | **X** | **Y** | **Z** | **Xs** | **Ys** | **Zs** |
| n=0 | 0 | 0 | 0 | 0 + 1/3 | 0 + 1/3 | 0 + 1/3 |
| n=1, X | 1/4 | 0 | 0 | 1/4 + 0 | 0 + 1/4 | 0 + 1/4 |
| n=1, Y | 0 | 1/4 | 0 | 0 + 1 /4 | 1/4 + 0 | 0 + 1/4 |
| n=1, Z | 0 | 0 | 1/4 | 0 + 1/4 | 0 + 1/4 | 1/4 + 0 |
| n=2, XY | 1/5 | 1/5 | 0 | 7/40 + 1/40 | 7/40 + 1/40 | 0 + 1/5 |
| n=2, XZ | 1/5 | 0 | 1/5 | 7/40 + 1/40 | 0 + 1/5 | 7/40 + 1/40 |
| n=2, YZ | 0 | 1/5 | 1/5 | 0 + 1/5 | 7/40 + 1/40 | 7/40 + 1/40 |
| n=3, XYZ | 1/6 | 1/6 | 1/6 | 1/8 + 1/24 | 1/8 + 1/24 | 1/8 + 1/24 |

In TABLE 2, the $x$, $y$, and $z$ columns correspond to the load on direct connections relative to a computing node along the $x$, $y$, and $z$ dimensions, respectively. The $xs$, $ys$, and $zs$ columns correspond to the load on indirect connections from a computing node to switches in the $x$, $y$, and $z$ dimensions, respectively. Also, in the $xs$, $ys$, and $zs$ columns, the first number in each cell corresponds to the load on the connection in the first phase, while the second number corresponds to the load on the connection in the second phase. Indirect connections at least partially diverted to add additional direct connection bandwidth are indicated by a non-zero value in the first number. The total load for each row adds up to one, indicating full utilization by the computing node in transmitting data through either the direct connections or the indirect connections.

The entries in TABLE 2 and in the later TABLEs show the fraction of the total collective bandwidth is distributed to each link in the network. The collective bandwidth can then be scaled up until a link reaches capacity. For example, if the links have a bandwidth of 100 GB/s, TABLE shows the demand on all links when delivering 100 GB/s of total collective bandwidth. The maximum demand on any link is only 20 GB/s, 1/5th the capacity of those links (out of 100 GB/s). TABLE 3 shows how the network configured as described here can deliver up to up to 500 GB/s of collective bandwidth. This is because the network in this example is operating at 1/5th capacity with maximum demand on the current workload, and so can be scaled by a factor of 5 to fully utilize link capacity while delivering 5 times the collective bandwidth (5 * 100).

The loads can be normalized to the bandwidth of a single connection in the computing network. For example, in the row "$n = 2$, $YZ$", the pattern is executed with a connection bandwidth of 100 GB/s, the corresponding row in TABLE 2 indicates the load induced on each of the connections in the computing network. TABLE 3 shows an example calculation when the connection bandwidth is 100 GB/s.

TABLE 3

| n=2, YZ | 0 * 100 = 0 GB/s | $\frac{1}{5} * 100 =$ 20 GB/s | $\frac{1}{5} * 100 =$ 20 GB/s | $(0 + \frac{1}{5}) * 100 = 0$ GB/s (first phase) + 20GB/s (second phase) | $(7/40 + 1/40) *$ 100 = 17.5 GB/s + 2.5 GB/s | 7/40 + 1/40 = 17.5 GB/s + 2.5 GB/s |
|---|---|---|---|---|---|---|

The collective pattern column indicates how many dimensions of the computing groups are used in the first phase. The row with $n$ equal to zero corresponds to no reduction, so the direct connections from the computing node, e.g., the $x$, $y$, and $z$ connections, are not used, indicated by a value of zero. The row is reproduced, below, as TABLE 4. The total load in this case occurs during the second phase, and the load can be distributed evenly across the indirect connections $xs$, $ys$, and $zx$, to reach a respective switch. Each cell in the indirect connection column is 0 + 1/3, indicating no load in the first phase, and 1/3 of the load in the second phase.

TABLE 4

| | **X** | **Y** | **Z** | **Xs** | **Ys** | **Zs** |
|---|---|---|---|---|---|---|
| n=0 | 0 | 0 | 0 | 0 + 1/3 | 0 + 1/3 | 0 + 1/3 |

The next three rows of TABLE 2 where $n$ is equal to 1 indicate that a reduction in the first phase is performed along a single dimension of the three total dimensions of each computing group. Each of the three rows is associated with a particular dimension, The row starting with "$n = 3$, $x$" is described and reproduced below with reference to TABLE 5, although it is understood that a similar description is applicable to the rows starting with "$n = 3$, $y$" and "$n = 3$, $z$." As an example, for balancing bandwidth between the first and the second phase, the ratio of bandwidth as described earlier is $2^n - 1$. For the $n = 1$ case, this means the ratio is $2^1 - 1 = 1$. The system 100 can use this ratio to determine direct to indirect connection bandwidth by using the $x$ dimension direct connection and the $xs$ indirect connection as direct connection bandwidth in the first phase, and the $ys$ and $zs$ indirect connections in the second phase. Each connection bears one-fourth of the total load.

TABLE 5

|  | X | Y | Z | Xs | Ys | Zs |
|---|---|---|---|---|---|---|
| n=1, X | 1/4 | 0 | 0 | 1/4 + 0 | 0 + 1/4 | 0 + 1/4 |

The next three rows of TABLE 2 where n is equal to 2 indicate that a reduction in the first phase is performed along two dimensions of the three total dimensions of each computing group. The row starting with "$n = 2$, $xy$" is described and reproduced below with reference to TABLE 6, although it is understood that a similar description is applicable to the rows starting with "$n = 2$, $xz$" and "$n = 2$, $yz$." As an example, for balancing bandwidth between the first and the second phase, the ratio of bandwidth is $2^2 - 1 = 3$. The system 100 can compute the fraction of the bandwidth of indirect connections to divert as direct connection bandwidth for maintaining the balance between phases. With the full bandwidth of the $x$ and $y$ direct connections used, the first phase has a total bandwidth of $2 + 2t$, where the bandwidth of $x$ and $y$ add up to two and where $t$ is the fraction of the bandwidth to divert, multiplied by two for the remaining indirect connections $xs$ and $ys$. In the second phase, the remaining bandwidth in the $xs$ and $ys$ indirect connections can be utilized, as well as the entire $zs$ indirect connection. The total bandwidth usage for the second phase is therefore $2 * (1 - t) + 1$. Because the ratio is 3:1 between the first and second phase bandwidth, the system 100 can solve for the fraction t. An example equation to solve t is:

$$2 + 2t = 3(2(1 - t) + 1) \rightarrow t = 7/8$$

Therefore, seven-eighths of the $xs$ and the $ys$ indirect connection bandwidth is diverted as direct connection bandwidth for balancing the first phase of the pipe-lined ScatterReduce. Five connections are utilized altogether in this example $x, y, xs, ys,$ and $zs$. Each connection is fully utilized, so the total load on each link is one-fifth. For $x$ and $y$, the total load is one-fifth in the first phase, and zero in the second phase, because $x$ and $y$ are direct connections. For $xs$ and $ys$, seven-fortieths of the total bandwidth are used during the first phase of execution, e.g., $\frac{1}{5} * \frac{7}{8} = \frac{7}{40}$, while the remaining bandwidth is one-fortieth, used in the second phase. For $zs$, there is zero load in the first phase, and one-fifth of the load in the second phase.

TABLE 6

|  | X | Y | Z | Xs | Ys | Zs |
|---|---|---|---|---|---|---|
| n=2, XY | 1/5 | 1/5 | 0 | 7/40 + 1/40 | 7/40 + 1/40 | 0 + 1/5 |

The last row starting with "$n = 3$, $xyz$" is described and reproduced below with reference to TABLE 7. In this example, all three dimensions of the computing groups are used in the first phase for data reduction. The ratio between the first phase and the second phase bandwidth can be computed or received by the system 100 as $2^3 - 1 = 7$. In the first phase, $t$ again represents the fraction at which the indirect connections $xs, ys,$ and $zs$ are utilized in the first phase, along with the full utilization of the bandwidth for the direct connections $x, y,$ and $z$. The total bandwidth in the first phase is $3 + 3t$, therefore the remaining bandwidth in the second phase for the three indirect connections is $3(1 - t)$. The system 100 can compute or receive the fraction $t$. An example equation to solve $t$ is:

$$3 + 3t = 7\big(3(1 - t)\big) \rightarrow t = \frac{3}{4}$$

Therefore, three-fourths of the bandwidth of the indirect connections $xs, ys,$ and $zs$ is used in the first phase, with the remaining one-fourth of the bandwidth used in the second phase. Six connections are used per computing node: $x, y, z,$

*xs, ys,* and *zs.* The system 100 distributes the load evenly across all six connections, at one-sixth load per link. For the indirect connections *xs, ys,* and *zs,* three-fourths of the load occurs in the first phase, for a total of $\frac{1}{6} * \frac{3}{4} = \frac{1}{8}$. The remaining load for each of the indirect connections in the second phase is $\frac{1}{6} * \frac{1}{4} = \frac{1}{24}$ of the load.

TABLE 7

|  | X | Y | Z | Xs | Ys | Zs |
|---|---|---|---|---|---|---|
| n=3, XYZ | 1/6 | 1/6 | 1/6 | 1/8 + 1/24 | 1/8 + 1/24 | 1/8 + 1/24 |

In some examples, multiple concurrent collective patterns of operations are executed on the computing network 101, along different dimensions. These collective patterns may be independent of one another, but still rely on the same indirect connections for communicating data to different groups of the network. Referring back to FIG. 4B and FIG. 4C, collective patterns 410B and 410C overlap in the indirect connections used as part of the computing network 400A executing those collective patterns. The direct connections between the computing nodes are not shared between the collective patterns 410A and 410B. Aspects of the disclosure provide for minimizing or reducing potential interference caused by sharing indirect connections for different independent collective patterns, while improving network throughput overall. Different collective patterns can be executed within and between the groups. For example, one collective pattern may be executed within a computing group, while another collective pattern may be executed for communicating data between the groups.

For example, in the hybrid network topology with three-dimensional hypercubes, there are fixed links or direct connections to the *x, y,* and *x* dimensions. Flexible links, e.g., indirect connections *xs, ys,* and *zs* connected to the switches, can be used by collective patterns in any dimension. For instance, a collective pattern may be executed by the computing network 101 in the *x*-dimensions, but the results of the executed pattern communicated to a *y*-dimension or *z*-dimension network switch.

Concurrent collective patterns executing on the computing network 101 may compete for shared switch bandwidth resources. To mitigate or eliminate this potential competition for switch bandwidth, the system 100 can be configured to maximize the use of direct connections, to reduce traffic that may potentially share indirect connections across different collective patterns of operations. The system 100 can be configured to schedule or execute a workload based on a set of compiled instructions from a compiler configured to maximize direct connection usage.

In some examples, the system 100 determines a maximum usage strategy itself, based on, for example, the overall payload size of data processed as part of executing a workload, and the reduction factor of collective patterns used to execute the workload. Examples follow for how the system 100 can improve direct connection utilization to reduce reliance on indirect connection bandwidth, when multiple collective patterns are executed by the system 100. For multiple concurrent collective patterns, a preferred or bandwidth allocation can be achieved when all concurrent collective patterns finish at or about the same time. The system 100 can be configured as described herein to balance execution of the different collective patterns along the indirect connections to cause the collective patterns to finish at or about the same time. In the following examples, the computing network 101 is assumed to implement three-dimensional hypercubes as computing group network topologies.

In the first phase of the two-stage pipe-line described herein, reference is again made to the ReduceScatter collective pattern, in which data is reduced among computing node groups in the first phase and scattered or distributed to the other groups in the second phase. As before, the first phase can be performed along zero or more dimensions of the computing groups.

In some examples, no reduction is performed in the first phase. In these examples, each collective pattern only uses flexible links or indirect connections, in the second phase. The total payload size for data transmitted along the flexible links, e.g., across *xs, ys,* and *zs* is $D_f = D_a + D_b + D_c$ for indirect connections across all concurrent collective patterns executed by the system 100. *a, b,* etc., can refer to different dimensions of the computing group topologies between different groups of processing nodes. The optimal time for all concurrent collectives is $t = \frac{D_f}{3}$, where 3 is the number of dimensions of the computing groups in this example. Therefore, for collective patterns at least partially executing on indirect connections along a dimension *a,* the bandwidth allocation for indirect connections along the dimension *a* to complete at the same time as the other collective patterns is $\frac{D_a}{t} = 3\left(\frac{D_a}{D_f}\right)$.

In some examples, each of the three dimensions of direct connections, e.g., *x, y,* and *z* are mapped to a respective collective pattern of operations executed by the system 100. The reduction factor in this example is $2^1 = 2$. The payload size of the direct connections along each dimension is $D_x, D_y, D_z$. The total payload size of the flexible links is $D_f$. The system 100 can receive or compute the time *t* for when the collective patterns are completed, to determine the bandwidth allocation for each collective pattern. The minimal time t can be computed as the t that satisfies the following inequalities, shown with explanations in TABLE 8. TABLE 8 outlines different conditions that may arise, e.g., when different combinations of the *x, y,* and *z* dimensions are mapped to a collective pattern of operations for reducing its respective payload.

TABLE 8

| Condition | Explanation |
|---|---|
| $$\frac{\left(D_f + \frac{D_x}{2} + \frac{D_y}{2} + \frac{D_z}{2}\right)}{t} \leq 3$$ | When this condition is met, there is enough flexible link bandwidth to finish transferring $D_f$ and the reduced payload ( $\frac{D_x}{2} + \frac{D_y}{2} + \frac{D_z}{2}$ ) from the second phase of the pipe-line, in time *t*. The 3 in the right-hand side corresponds to each dimension of flexible links of the computing groups. |
| $$\frac{\left(D_f + D_x + \frac{D_y}{2} + \frac{D_z}{2}\right)}{t} \leq 3 + 1$$ $$\frac{\left(D_f + \frac{D_x}{2} + D_y + \frac{D_z}{2}\right)}{t} \leq 3 + 1$$ $$\frac{\left(D_f + \frac{D_x}{2} + \frac{D_y}{2} + D_z\right)}{t} \leq 3 + 1$$ | When these conditions are met, there is enough flexible link bandwidth plus fixed link bandwidth along one dimension to finish transferring $D_f$, the fixed link payload that is not reduced, ($D_x, D_y,$ or $D_z$), and the reduced payload ( $\frac{D_x}{2}, \frac{D_y}{2}$, or $\frac{D_z}{2}$ ). The 3 in the right-hand size corresponds to each dimension of flexible links, the 1 in the right-hand size corresponds to the fixed link of the one dimension that does not transmit a reduced payload. |
| $$\frac{\left(D_f + D_x + D_y + \frac{D_z}{2}\right)}{t} \leq 3 + 2$$ $$\frac{\left(D_f + \frac{D_x}{2} + D_y + D_z\right)}{t} \leq 3 + 2$$ $$\frac{\left(D_f + D_x + \frac{D_y}{2} + D_z\right)}{t} \leq 3 + 2$$ | When these conditions are met, there is enough flexible link bandwidth plus fixed link bandwidth along one dimension to finish transferring $D_f$, the fixed link payload that is not reduced, ($D_x, D_y,$ or $D_z$), and the two reduced payloads (two of $\frac{D_x}{2}, \frac{D_y}{2}, \frac{D_z}{2}$ ). The 3 in the right-hand size corresponds to each dimension of flexible links, the 2 in the right-hand side corresponds to the fixed links of the two dimensions that do not transmit a reduced payload. |
| $$\frac{\left(D_f + D_x + D_y + D_z\right)}{t} \leq 6$$ | When this condition is met, there is egress bandwidth from a computing node to transfer all payloads. The six in the right-hand size corresponds to all six available direct and indirect connections. |

The system 100 can solve the conditions to find the smallest time t and calculate the bandwidth allocation for each flexible dimension, e.g., for flexible dimension *a* as $\frac{D_a}{t}$ . The bandwidth allocation for fixed dimension *x* is $\frac{D_x}{t}$ . In this example, the reduction factor is two, so half of the bandwidth is inter-group, and the remaining one half is intra-group. In other words, the intra-group bandwidth allocation for dimension *x* is $\frac{D_x}{2t}$ and the inter-group bandwidth allocation dimension *x* is $\frac{D_x}{2t}$ .

In some examples, each dimension of fixed links is mapped to one of two different collective patterns of operations executed along the dimension. TABLE 9 shows the conditions and explanations for satisfying the conditions to calculate the lowest time to execute all of the collective patterns on the computing network 101 at or about the same time. The total payload size of the flexible links is $D_f$, the payload size of the fixed links is $D_{xy}$ and $D_z$.

TABLE 9

| Condition | Explanation |
|---|---|
| $$\frac{\left(D_f + \frac{D_{xy}}{4} + \frac{D_z}{2}\right)}{t} \leq 3$$ | When this condition is met, there is enough flexible link bandwidth to finish transferring $D_f$ and the reduced payload ($\frac{D_{xy}}{4} + \frac{D_z}{2}$) from the second phase of the pipe-line, in time $t$. The 3 in the right-hand side corresponds to each dimension of flexible links of the computing groups. |
| $$\frac{\left(D_f + \frac{D_{xy}}{4} + D_z\right)}{t} \leq 3 + 1$$ | When this condition is met, there is enough flexible link bandwidth and fixed link bandwidth to finish transferring $D_f$, the unreduced fixed link payload ($D_z$), and the reduced payload ($\frac{D_{xy}}{4}$), in time $t$. The 3 in the right-hand side corresponds to each dimension of flexible links of the computing groups, the 1 in the right-hand size corresponds to the fixed link of the one dimension that does not transmit a reduced payload. |
| $$\frac{\left(D_f + D_{xy} + \frac{D_z}{2}\right)}{t} \leq 3 + 2$$ | When this condition is met, there is enough flexible link bandwidth and fixed link bandwidth to finish transferring $D_f$, the unreduced fixed link payload ($D_{xy}$), and the reduced payload ($\frac{D_z}{2}$), in time $t$. The 3 in the right-hand side corresponds to each dimension of flexible links of the computing groups, the 2 in the right-hand size corresponds to the fixed links of the two dimensions that do not transmit a reduced payload. |
| $$\frac{\left(D_f + D_x + D_y + D_z\right)}{t} \leq 6$$ | When this condition is met, there is egress bandwidth from a computing node to transfer all payloads. The six in the right-hand size corresponds to all six available direct and indirect connections. |

The system 100 can solve the conditions to find the smallest time $t$ and calculate the bandwidth allocation for each flexible dimension, e.g., for flexible dimension $a$ as $\frac{D_a}{t}$. The bandwidth allocation for fixed dimension $z$ is $\frac{D_z}{t}$. In this example, the reduction factor is two, so half of the bandwidth is inter-group, and the remaining one half is intra-group. In other words, the intra-group bandwidth allocation for dimension z is $\frac{D_z}{2t}$ and the inter-group bandwidth allocation dimension $z$ is $\frac{D_z}{2t}$. The bandwidth allocation for fixed dimension $xy$ is $\frac{D_{xy}}{t}$. Because the reduction factor is 4 (twice the reduction factor of two, for two dimensions), the bandwidth allocation is one quarter for inter-group bandwidth ($\frac{D_{xy}}{4t}$) and three quarters for intra-group bandwidth ($\frac{3D_{xy}}{4t}$).

In some examples, each dimension of fixed links is mapped to the same collective pattern. TABLE 10 shows the conditions and explanation for satisfying the conditions to calculate the lowest time to execute all of the collective patterns on the computing network 101 at or about the same time. The total payload size of the flexible links is $D_f$, the payload size of the fixed links is $D_{xyz}$.

TABLE 10

| | |
|---|---|
| $$\dfrac{\left(D_f + \dfrac{D_{xyz}}{8}\right)}{t} \leq 3$$ | When this condition is met, there is enough flexible link bandwidth and the reduced payload ($\dfrac{D_{xyz}}{8}$), in time $t$. The 3 in the right-hand side corresponds to each dimension of flexible links of the computing groups. |
| $$\dfrac{\left(D_f + D_{xyz}\right)}{t} \leq 6$$ | When this condition is met, there is egress bandwidth from a computing node to transfer all payloads. The six in the right-hand size corresponds to all six available direct and indirect connections. |

The system 100 can solve the conditions to find the smallest time $t$ and calculate the bandwidth allocation for each flexible dimension, e.g., for flexible dimension $a$ as $\dfrac{D_a}{t}$. The bandwidth allocation for each fixed dimension, e.g., dimension $z$, is $\dfrac{D_{xyz}}{t}$. In this example, the reduction factor is eight, so one-eighth of the bandwidth is inter-group, and the remaining seven-eighths is intra-group. In other words, the intra-group bandwidth allocation for dimension $z$ is $\dfrac{7D_z}{8t}$ and the inter-group bandwidth allocation dimension $z$ is $\dfrac{D_z}{8t}$.

FIG. 5X is a block diagram of an example hybrid network topology along the $x$-dimension for two groups of computing nodes, each having three dimensions. In FIG. 5X, group of computing nodes HC1 and group of computing nodes HC2 are shown. Each computing node is labeled with a three-digit coordinate.

Group HC1 includes computing node 000, computing node 001, computing node 011, computing node 010, computing node 110, computing node 100, computing node 101, and computing node 111. Computing nodes in group HC2 use the same three-digit coordinate but are different computing nodes relative to the computing nodes in group HC1. Group HC2 includes computing node 000, computing node 001, computing node 011, computing node 010, computing node 110, computing node 100, computing node 101, and computing node 111.

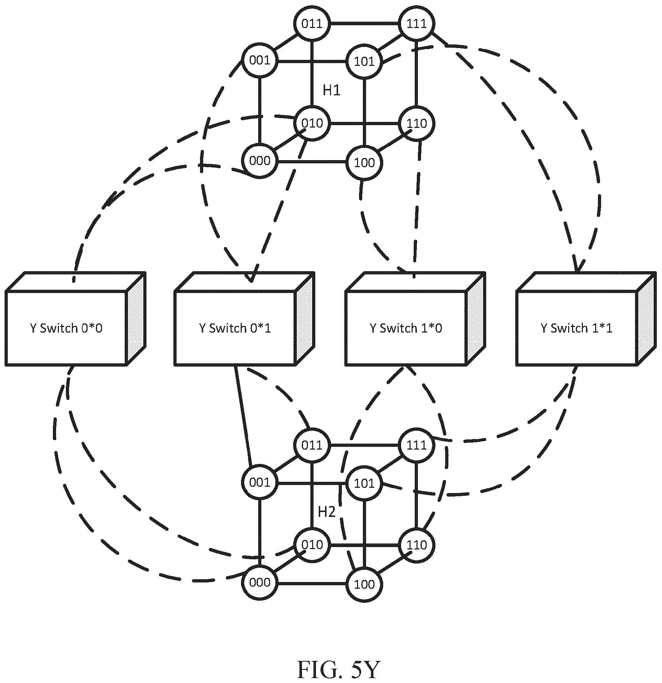

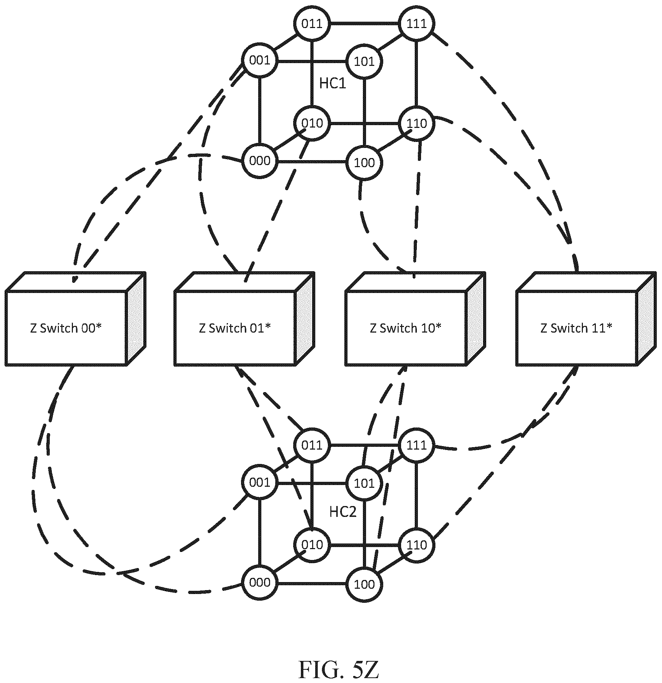

As shown in FIGs. 5X, 5Y, and 5Z, group HC1 and group HC2 are arranged in a hypercube network topology, each hypercube having three dimensions ($n$=3). Pairs of neighboring computing nodes within a hypercube are connected through direct connections within each group. Pairs of neighboring hypercubes are also connected to switches, one switch for each dimension of the hypercube. FIG. 5X shows four $x$-dimension switches. Each of the $x$-dimension switches have a corresponding label, e.g., *00. The '*' is a wildcard label representing either '0' or '1.'

The $x$-dimension switches of FIG. 5X include $x$ switch *00, $x$ switch *01, $x$ switch *10, and $x$ switch *11. The $x$-dimension switches connect the following computing nodes in group HC1 and HC2. The $x$ switch *00 is connected to computing node 000 in HC1, computing node 000 in HC2, computing node 100 in HC1, and computing node 100 in HC2. The $x$ switch *01 is connected to computing node 001 in HC1, computing node 001 in HC2, computing node 101 in HC1, and computing node 101 in HC2. The $x$ switch *10 is connected to computing node 010 in HC1, computing node 010 in HC2, computing node 110 in HC1, and computing node 110 in HC2. The $x$ switch *11 is connected to computing node 011 in HC1, computing node 011 in HC2, computing node 111 in HC1, and computing node 111 in HC2.

FIG. 5Y is a block diagram of an example hybrid network topology along the $y$-dimension for the two groups of computing nodes. The $y$-dimension switches of FIG. 5Y include $y$ switch 0*0, $y$ switch 0*1, $y$ switch 1*0, and $y$ switch 1*1. The $y$-dimension switches connect the following computing nodes in group HC1 and HC2. $y$ switch 0*0 is connected to computing node 000 in HC1, computing node 000 in HC2, computing node 010 in HC1, and computing node 010 in HC2. The $y$ switch 0*1 is connected to computing node 001 in HC1, computing node 001 in HC2, computing node 011 in HC1, and computing node 011 in HC2. The y switch 1*0 is connected to computing node 110 in HC1, computing node 110 in HC2, computing node 100 in HC1, and computing node 100 in HC2. The y switch 1*1 is connected to computing node 101 in HC1, computing node 101 in HC2, computing node 111 in HC1, and computing node 111 in HC2.

FIG. 5Z is a block diagram of an example hybrid network topology along the $z$-dimension for two groups of computing nodes. The $z$-dimension switches of FIG. 5Z include $z$ switch 00*, $z$ switch 01*, $z$ switch 10*, and $z$ switch 11*. The $z$-dimension switches connect the following computing nodes in group HC1 and HC2. $z$ switch 00* is connected to computing node 000 in HC1, computing node 000 in HC2, computing node 001 in HC1, and computing node 001 in HC2. The z switch 01* is connected to computing node 011 in HC1, computing node 011 in HC2, computing node 010 in HC1, and computing node 010 in HC2. The $z$ switch 10* is connected to computing node 100 in HC1, computing node 100 in HC2, computing node 101 in HC1, and computing node 101 in HC2. The z switch 11* is connected to computing node 111 in HC1, computing node 111 in HC2, computing node 110 in HC1, and computing node 110 in HC2.

TABLE 3 is a table of the above-described variables in the context of FIGs. 5X-5Z. The twelve switches indicated in TABLE 11 are shown across FIGs. 5X-5Z in sets of four, one set for each dimension. It is understood that the same approach can be extended for groups of higher dimensions, e.g., hybrid network topologies with hypercubes of dimension 3, 4, and so on.

TABLE 11

| Number of groups ($H$) | 2 |
| --- | --- |
| Dimensionality of each group ($n$) | 3 |
| Number of computing nodes per group ($2^n$) | 8 |
| Number of computing nodes in total ($H * 2^n$) | 16 |
| Number of switches ($n * 2^{n-1}$) | 12 |
| Number of connections per node ($n$ direct connections + $n$ indirect connections) | 6 |

One or both indirect connections between the computing nodes of the two groups HC1 and HC2 for any given switch may be used for communicating data between the hypercubes. The network arranged in this hybrid network topology reduces bottlenecking in data transmission caused with fewer connections between groups of computing nodes. However, the network can divert some or all bandwidth of the indirect connections as direct connections between the neighboring computing nodes, to reduce bottlenecks when executing operations within each group of computing nodes.

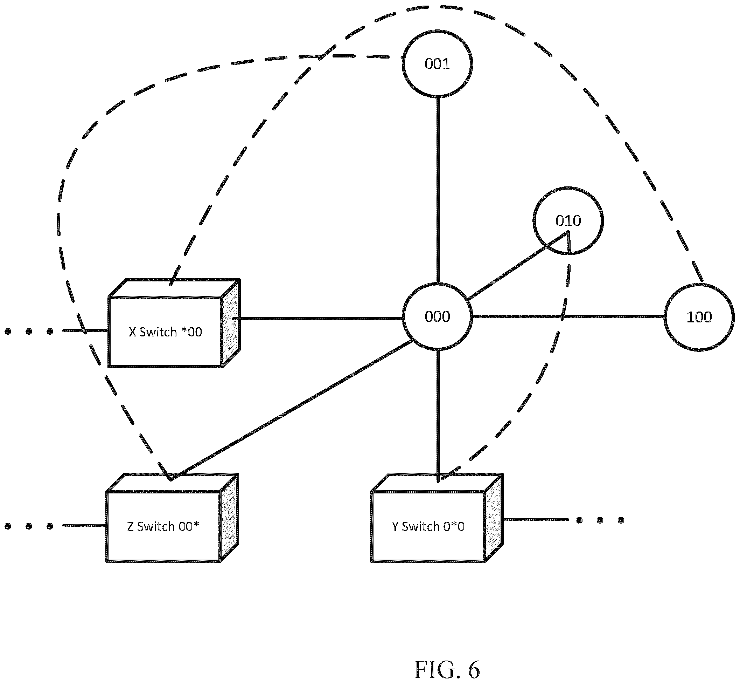

FIG. 6 is a block diagram illustrating the connections of a computing node 000 in the hybrid network topology shown with reference to FIGs. 5X-5Z. For ease of description, only connections from the computing node 000 are shown and indirect connections for neighboring computing nodes to depicted switches are shown.

The computing node 000 has six connections, three direct connections to neighboring nodes and three indirect connections to nodes of other groups, through three switches. Each switch corresponds to a respective dimension of the group of which the computing node 000 is a part. The computing node 000 has direct connections to computing node 001, computing node 010, and computing node 100. The computing node 000 is also connected to the $x$-switch *00, the $y$-switch 0*0, and the $z$-switch 00*. As shown in TABLE 11, the number of connections per computing node can be equal to the sum of $n$ direct connections and $n$ indirect connections, for a total of six connections total in this example.

Indirect connections between neighboring computing nodes and switches are shown as dashed lines. In FIG. 6, computing node 001 is connected to the $z$ switch 00*, the computing node 100 is connected to the $x$ switch *00, and the computing node 010 is connected to the $y$ switch 0*0. The dashed line connections illustrate indirect connections that can be diverted to provide direct connection bandwidth between the computing node 000 and each of its neighbors. For example, egress bandwidth to the y switch 0*0 can be diverted to add additional direct connection bandwidth between computing node 000 and computing node 010. As another example, egress bandwidth to the $x$ switch *00 can be diverted to provide direct connection bandwidth between the computing node 000 and the computing node 001. As another example, egress bandwidth to the $z$ switch 00* can be diverted to add additional direct connection bandwidth between computing node 000 and 001. The bandwidth for each indirect connection can divert up to its maximum bandwidth to add respective direct connection bandwidth along a dimension of the hybrid network topology. Computing node 000, and each of the other computing nodes in a group of computing nodes of a hybrid network topology, can have bandwidth diverted as necessary to better execute different collective patterns of operations.

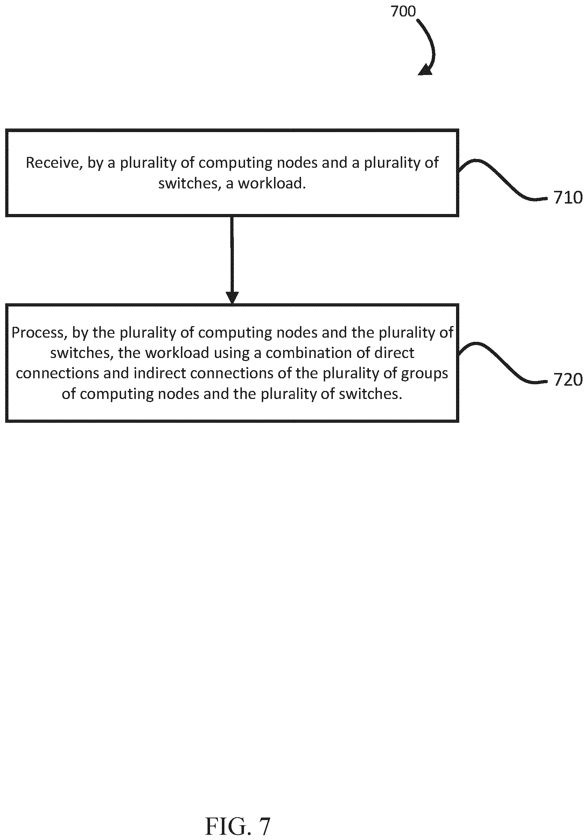

FIG. 7 is a flow diagram of an example process 700 for processing a workload on a hybrid network topology, according to aspects of the disclosure. The example process 700 can be performed on a system of computing nodes and switches in one or more locations, such as the workload execution system 100 of FIG. 1.

The system receives, by a plurality of computing nodes and a plurality of switches, a workload, according to block 710. The plurality of computing nodes at least partially forms a plurality of groups. A group of the plurality of groups is arranged in a network topology including a plurality of dimensions. A computing node in the group includes one or more direct connections to at least one other computing node in the group. For each dimension of the plurality of dimensions, the computing node can be connected to a quantity of switches larger than or equal to the quantity of dimensions. Each switch of the plurality of switches can include one or more indirect connections between at least one computing node of the group along the dimension to another computing node along the dimension of another group of computing nodes.

The system processes, by the plurality of computing nodes and the plurality of switches, the workload using a combination of direct connections and indirect connections of the plurality of groups of computing nodes and the plurality of switches, according to block 720.

The system can include one or more computing nodes, e.g., implementing a scheduling engine, of the plurality of computing nodes that are configured to determine a ratio of direct connection bandwidth to indirect connection bandwidth used to process the received workload based on a traffic pattern associated with the received workload.

The workload can be a machine learning workload, and the traffic pattern associated with the machine learning workload corresponds to a collective pattern of operations for implementing at least one of a form of model or data parallelism on input data or data at least partially specifying a machine learning model.

In some examples, one or more computing nodes of the plurality of computing nodes are configured to adjust a respective ratio of direct connection bandwidth to indirect connection bandwidth based on one or more respective collective patterns of operations for executing the workload. In some examples the one or more computing nodes implement a scheduling engine configured to adjust the ratio.

Each group of computing nodes can be arranged in a hypercube topology. The plurality of groups of computing nodes and the plurality of switches can form at least part of one or more layers of a network arranged in a network topology including a plurality of layers. The plurality of layers can include computing nodes and switches arranged in a fat-tree or folded-Clos network topology. The layer at least partly defined by the plurality of the groups of computing nodes and the plurality of switches can be the lowest layer of the fat-tree or folded-Clos network topology. The quantity of switches can be equal to $n * 2^{n-1}$, where $n$ is the quantity of the plurality of dimensions.

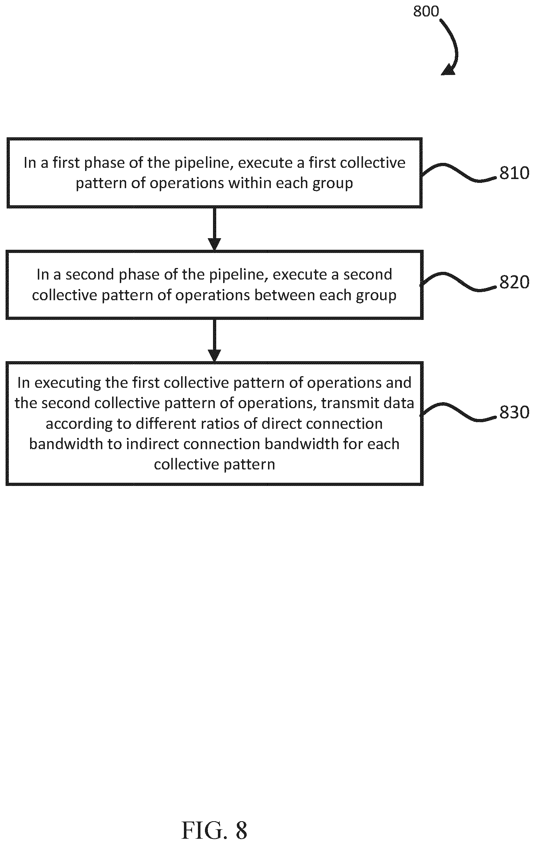

FIG. 8 is a flow diagram of an example process 800 for executing a multi-stage pipeline of collective patterns of operations, for processing a workload on a hybrid network topology. The example process can be performed on a system of one or more computing nodes in one or more locations, such as the workload execution system 100 of FIG. 1.

In a first phase of the pipeline, the one or more computing nodes execute a first collective pattern of operations within each group, according to block 810.

In a second phase of the pipeline, the one or more computing nodes execute a second collective pattern of operations between each group, according to block 820.

In executing the first collective pattern of operations and the second collective pattern of operations, the one or more computing nodes transmit data according to different ratios of direct connection bandwidth to indirect connection bandwidth for each collective pattern, according to block 830.

The computing nodes can be configured to adjust ratios of direct connection bandwidth to indirect connection bandwidth, by diverting bandwidth from an indirect connection between computing nodes in different groups to bandwidth for an additional direct connection between computing nodes in the same group. Diverted bandwidth can include bandwidth for data passing from a first computing node in a first group, through a first switch, and to a second computing node in the first group and including a direct connection to the first computing node.

In diverting the bandwidth, the computing nodes can divert, for at least one group of the plurality of groups of the computing network, between 50% to 100% of indirect connection bandwidth to direct connection bandwidth.

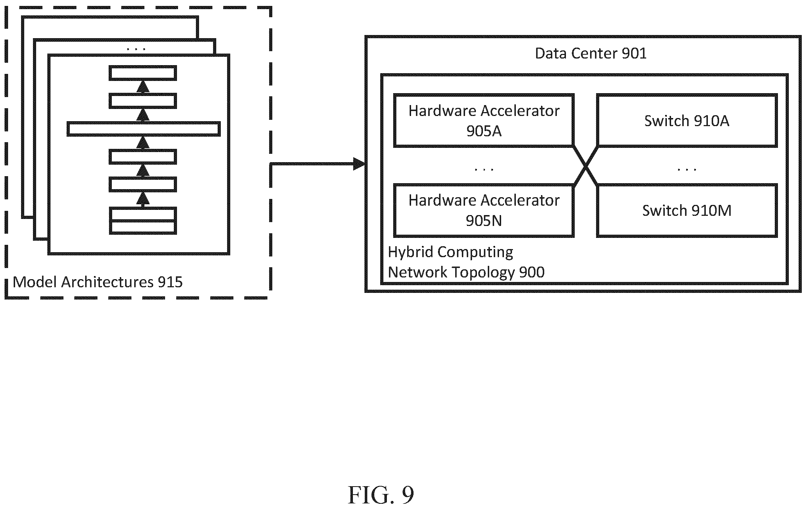

FIG. 9 is a block diagram illustrating one or more model architectures 915 associated with a machine learning workload, such as for deployment in a data center 901 that houses hardware accelerators 905A-905N and switches 910A-910M arranged in a hybrid network topology 900. The hardware accelerators 905A-905N can be any type of processor, such as a CPU, GPU, FPGA, or ASIC such as a TPU.

An architecture of a model can refer to characteristics defining the model, such as characteristics of layers for the model, how the layers process input, or how the layers interact with one another. For example, the model can be a convolutional neural network that includes a convolution layer that receives input data, followed by a pooling layer, followed by a fully connected layer that generates a result. The architecture of the model can also define types of operations performed within each layer. For example, the architecture of a convolutional neural network may define that rectified linear unit (ReLU) activation functions are used in the fully connected layer of the network. One or more model architectures can be generated that can output results associated with a machine learning workload executed in the data center 901.

The machine learning models can be trained in a variety of different learning techniques. Learning techniques for training the machine learning models can include supervised learning, unsupervised learning, semi-supervised learning, and reinforcement learning techniques. For example, training data can include multiple training examples that can be received as input by the machine learning models. The training examples can be labeled with a desired output for the model when processing the labeled training examples. The model output can be evaluated through a loss function to determine an error, which can be backpropagated through the machine learning model to update weights for the model.

For example, a supervised learning technique can be applied to calculate an error between outputs, with a ground-truth label of a training example processed by the model. Any of a variety of loss or error functions appropriate for the type of the task the model is being trained for can be utilized, such as cross-entropy loss for classification tasks, or mean square error for regression tasks. The gradient of the error with respect to the different weights of the candidate model on candidate hardware can be calculated, for example using a backpropagation algorithm, and the weights for the model can be updated.

FIG. 10 is a block diagram of an example computing environment 1000 for implementing the workload execution system 100. The system 100 can be implemented on one or more devices having one or more processors in one or more locations, such as in the data center 901, which can include server computing device 1015 and hardware accelerators 905A-905N and switches 910A-910M arranged in a hybrid network topology 900. and. In some examples, the server computing device 1015 is implemented as a device arranged in the hybrid network topology 900. User computing device 1012 and the server computing device 1015 can be communicatively coupled to one or more storage devices 1030 over a network 1060. The storage device(s) 1030 can be a combination of volatile and non-volatile memory and can be at the same or different physical locations than the computing devices 1012, 1015. For example, the storage device(s) 1030 can include any type of non-transitory computer readable medium capable of storing information, such as a hard-drive, solid state drive, tape drive, optical storage, memory card, ROM, RAM, DVD, CD-ROM, write-capable, and read-only memories.

The server computing device 1015 can include one or more processors 1013 and memory 1014. The memory 1014 can store information accessible by the processor(s) 1013, including instructions 1021 that can be executed by the processor(s) 1013. The memory 1014 can also include data 1023 that can be retrieved, manipulated, or stored by the processor(s) 1013. The memory 1014 can be a type of non-transitory computer readable medium capable of storing information accessible by the processor(s) 1013, such as volatile and non-volatile memory. The processor(s) 1013 can include one or more central processing units, (CPUs), graphic processing units (GPUs), field-programmable gate arrays (FPGAs), and/or application-specific integrated circuits (ASICs), such as tensor processing units (TPUs).

The instructions 1021 can include one or more instructions that when executed by the processor(s) 1013, causes the one or more processors to perform actions defined by the instructions. The instructions 1021 can be stored in object code format for direct processing by the processor(s) 1013, or in other formats including interpretable scripts or collections of independent source code modules that are interpreted on demand or compiled in advance. The instructions 1021 can include instructions for implementing the system 400 consistent with aspects of this disclosure. The system 100 can be executed using the processor(s) 1013, and/or using other processors of the data center 901.

The data 1023 can be retrieved, stored, or modified by the processor(s) 1013 in accordance with the instructions 1021. The data 1023 can be stored in computer registers, in a relational or non-relational database as a table having a plurality of different fields and records, or as JSON, YAML, proto, or XML documents. The data 1023 can also be formatted in a computer-readable format such as, but not limited to, binary values, ASCII, or Unicode. Moreover, the data 1023 can include information sufficient to identify relevant information, such as numbers, descriptive text, proprietary codes, pointers, references to data stored in other memories, including other network locations, or information that is used by a function to calculate relevant data. The term "database" refers to any collection of data. The data can be unstructured or structured in any manner. The data can be stored on one or more storage devices in one or more locations. For example, an index database can include multiple collections of data, each of which may be organized and accessed differently.

The user computing device 1012 can also be configured similarly to the server computing device 1015, with one or more processors 1016, memory 1017, instructions 1018, and data 1019. The user computing device 1012 can also include a user output 1026, and a user input 1024. The user input 1024 can include any appropriate mechanism or technique for receiving input from a user, such as keyboard, mouse, mechanical actuators, soft actuators, touchscreens, microphones, and sensors.

The server computing device 1015 can be configured to transmit data to the user computing device 1012, and the user computing device 1012 can be configured to display at least a portion of the received data on a display implemented as part of the user output 1026. The user output 1026 can also be used for displaying an interface between the user computing device 1012 and the server computing device 1015. The user output 1026 can alternatively or additionally include one or more speakers, transducers or other audio outputs, a haptic interface or other tactile feedback that provides non-visual and non-audible information to the platform user of the user computing device 1012.

Although FIG. 10 illustrates the processors 1013, 1016 and the memories 1014, 1017 as being within the computing devices 1015, 1012, components described in this specification, including the processors 1013, 1016 and the memories 1014, 1017 can include multiple processors and memories that can operate in different physical locations and not within the same computing device. For example, some of the instructions 1021, 1018 and the data 1023, 1019 can be stored on a removable SD card and others within a read-only computer chip. Some or all of the instructions and data can be stored in a location physically remote from, yet still accessible by, the processors 1013, 1016. Similarly, the processors 1013, 1016 can include a collection of processors that can perform concurrent and/or sequential operation. The computing devices 1015, 1012 can each include one or more internal clocks providing timing information, which can be used for time measurement for operations and programs run by the computing devices 1015, 1012.

The server computing device 1015 can be configured to receive requests to process data from the user computing device 1012. For example, the environment 1000 can be part of a computing platform configured to provide a variety of services to users, through various user interfaces and/or APIs exposing the platform services. One or more services can be a machine learning framework or a set of tools for generating neural networks or other machine learning models according to a specified task and training data. The user computing device 1012 may receive and transmit data specifying target computing resources to be allocated for executing a neural network trained to perform a particular neural network task.

The devices 1012, 1015 can be capable of direct and indirect communication over the network 1060. The devices 1015, 1012 can set up listening sockets that may accept an initiating connection for sending and receiving information. The network 1060 itself can include various configurations and protocols including the Internet, World Wide Web, intranets, virtual private networks, wide area networks, local networks, and private networks using communication protocols proprietary to one or more companies. The network 1060 can support a variety of short- and long-range connections. The short- and long-range connections may be made over different bandwidths, such as 2.402 GHz to 2.480 GHz (commonly associated with the Bluetooth® standard), 2.4 GHz and 5 GHz (commonly associated with the Wi-Fi® communication protocol); or with a variety of communication standards, such as the LTE® standard for wireless broadband communication. The network 1060, in addition or alternatively, can also support wired connections between the devices 1012, 1015, including over various types of Ethernet connection.

Although a single server computing device 1015, user computing device 1012, and data center 901 are shown in FIG. 10, it is understood that the aspects of the disclosure can be implemented in a variety of different configurations and quantities of computing devices, including in paradigms for sequential or parallel processing, or over a distributed network of multiple devices. In some implementations, aspects of the disclosure can be performed on a single device, and any combination thereof.

Example Use Cases

As described herein, aspects of the disclosure provide for training and processing machine learning workloads using a network of computing nodes and switches arranged in a hybrid network topology. Examples of machine learning workloads follow. Although machine learning workloads are described, it is understood that artificial intelligence workloads in general may be executed according to aspects of the disclosure. In addition, other types of workloads of non-machine learning or non-AI workloads may be executed on networks arranged in a hybrid network topology. Examples include tracking, processing, or storing large quantities of data, encoding data, weather forecasting, economic forecasting, and physics simulations.

As an example, the input to a machine learning model can be in the form of images, videos. A machine learning model can be configured to extract, identify, and generate features as part of processing a given input, for example as part of a computer vision task. A machine learning model trained to perform this type of machine learning model task can be trained to generate an output classification from a set of different potential classifications. In addition, or alternatively, the machine learning model can be trained to output a score corresponding to an estimated probability that an identified subject in the image or video belongs to a certain class.

As another example, the input to the machine learning model can be data files corresponding to a particular format, e.g., HTML files, word processing documents, or formatted metadata obtained from other types of data, such as metadata for image files. A machine learning model task in this context can be to classify, score, or otherwise predict some characteristic about the received input. For example, a machine learning model can be trained to predict the probability received input includes text relating to a particular subject. Also, as part of performing a particular task, the machine learning model can be trained to generate text predictions, for example as part of a tool for auto-completion of text in a document as the document is being composed. A machine learning model can also be trained for predicting a translation of text in an input document to a target language, for example as a message is being composed.

Other types of input documents can be data relating to characteristics of a network of interconnected devices. These input documents can include activity logs, as well as records concerning access privileges for different computing devices to access different sources of potentially sensitive data. A machine learning model can be trained for processing these and other types of documents for predicting on-going and future security breaches to the network. For example, the machine learning model can be trained to predict intrusion into the network by a malicious actor.

As another example, the input to a machine learning model can be audio input, including streamed audio, pre-recorded audio, and audio as part of a video or other source or media. A machine learning model task in the audio context can include speech recognition, including isolating speech from other identified sources of audio and/or enhancing characteristics of identified speech to be easier to hear. A machine learning model can be trained to predict an accurate translation of input speech to a target language, for example in real-time as part of a translation tool.

In addition to data input, including the various types of data described herein, a machine learning model can also be trained to process features corresponding to given input. Features are values, e.g., numerical, or categorical, which relate to some characteristic of the input. For example, in the context of an image, a feature of the image can relate to the RGB value for each pixel in the image. A machine learning model task in the image/video context can be to classify contents of an image or video, for example for the presence of different people, places, or things. Machine learning models can be trained to extract and select relevant features for processing to generate an output for a given input and can also be trained to generate new features based on learned relationships between various characteristics of input data.

Implementations of the present technology include, but are not limited to, the following:

(1) A system, including: a plurality of computing nodes at least partially forming a plurality of groups, wherein a group of the plurality of groups is arranged in a network topology including a plurality of dimensions, a computing node in the group including one or more direct connections to at least one other computing node in the group, for each dimension of the plurality of dimensions, a plurality of switches, the computing node connected to a quantity of switches larger than or equal to the quantity of dimensions, wherein each switch of the plurality of switches includes one or more indirect connections between at least one computing node of the group along the dimension to another computing node along the dimension of a another group of computing nodes, and wherein the plurality of computing nodes is configured to: receive a workload; and process the workload using a combination of direct connections and indirect connections of the plurality of groups of computing nodes and the plurality of switches.

(2) The system of (1): wherein, in processing the workload, one or more computing nodes of the plurality of computing nodes are configured to determine a ratio of direct connection bandwidth to indirect connection bandwidth used to process the received workload based on a traffic pattern associated with the received workload.

(3) The system of (2): wherein the workload is a machine learning workload, and the traffic pattern associated with the machine learning workload corresponds to a collective pattern of operations for implementing at least one of a form of model or data parallelism on input data or data at least partially specifying a machine learning model.

(4) The system of any one of (1) through (3), wherein one or more computing nodes of the plurality of computing nodes are configured to adjust a respective ratio of direct connection bandwidth to indirect connection bandwidth based on one or more respective collective patterns of operations for executing the workload.

(5) The system of (4): wherein the plurality of computing nodes of the system are configured to process the workload in accordance with a pipeline of collective patterns of operations, and wherein: in a first phase of the pipeline, the one or more computing nodes of the plurality of computing nodes execute a first collective pattern of operations within each group, in a second phase of the pipeline, the one or more computing nodes of the plurality of computing nodes execute a second collective pattern of operations between each group, and in executing the first collective pattern of operations and the second collective pattern of operations, the plurality of computing nodes is configured to transmit data according to different ratios of direct connection bandwidth to indirect connection bandwidth for each collective pattern.

(6) The system of either one of (4) or (5): wherein, in adjusting the respective ratio of direct connection bandwidth to indirect connection bandwidth, the plurality of computing nodes is configured to: divert bandwidth from an indirect connection between computing nodes in different groups to bandwidth for an additional direct connection between computing nodes in the same group.

(7) The system of (6): wherein diverted bandwidth includes bandwidth for data passing from a first computing node in a first group, through a first switch, and to a second computing node in the first group and including a direct connection to the first computing node.

(8) The system of either one of (6) or (7): wherein, in diverting the bandwidth, the plurality of computing nodes is configured to divert, for at least one group of the plurality of groups, between 50% to 100% of indirect connection bandwidth to direct connection bandwidth.

(9) The system of any one of (1) through (8), wherein each group of computing nodes forms a hypercube topology.

(10) The system of any one of (1) through (9), wherein the plurality of groups of computing nodes and the plurality of switches form at least part of one or more layers of a network arranged in a network topology including a plurality of layers.

(11) The system of (10): wherein the plurality of layers includes computing nodes and switches arranged in a fat-tree or folded-Clos network topology.

(12) The system of (11): wherein the layer formed at least partly by the plurality of the groups of computing nodes and the plurality of switches is the lowest layer of the fat-tree or folded-Clos network topology.

(13) The system of any one of (1) through (12): wherein the quantity of switches is equal to $n * 2^{n-1}$, where $n$ is the quantity of the plurality of dimensions.

(14) A computing device, including: memory, a plurality of connections, including one or more direct connections to one or more other computing devices of a group including the computing device and arranged in a network topology, and one or more indirect connections to one or more network switches, wherein the quantity of direct connections and the quantity of indirect connections are larger than or equal to the number of dimensions of the network topology, and one or more processors configured to: receive a portion of a workload; and process the portion of the workload using a combination of bandwidth from the one or more direct connections and one or more indirect connections.

(15) The computing device of (14), wherein the one or more processors are further configured to: receive input including a ratio of direct bandwidth to indirect bandwidth used to process the receive portion of the workload, the ratio based on a traffic pattern associated with the received portion of the workload; and process the portion of the workload using a combination of bandwidth from the one or more direct connections and the one or more indirect connections, in accordance with the received ratio.

(16) The computing device of (15), wherein the one or more processors are further configured to: receive a portion of a second workload different from the portion of the workload; receive an second ratio of direct bandwidth to indirect bandwidth different from the received ratio; and process the portion of the second workload using a combination of bandwidth from the one or more direct connections and the one or more indirect connections, in accordance with the second ratio.

(17) The computing device of any one of (14) through (16): wherein, in processing the workload, one or more processors are configured to determine a ratio of direct connection bandwidth to indirect connection bandwidth used to process the received workload based on a traffic pattern associated with the received workload.

(18) The computing device of (17): wherein the workload is a machine learning workload, and the traffic pattern associated with the machine learning workload corresponds to a collective pattern of operations for implementing at least one of a form of model or data parallelism on input data or data at least partially specifying a machine learning model.

(19) The computing device of any one of (14) through (18), wherein the one or more processors are configured to adjust a respective ratio of direct connection bandwidth to indirect connection bandwidth based on one or more respective collective patterns of operations for executing the workload.

(20) The computing device of any one of (14) through (19), wherein the one or more processors are configured to process the portion of the workload in accordance with a pipeline of collective patterns of operations, and wherein: in a first phase of the pipeline, the one or more processors are configured to execute at least a portion of a first collective pattern of operations within each group, in a second phase of the pipeline, the one or more processors are configured to execute at least a portion of a second collective pattern of operations between each group, and in executing at least the portion of the first collective pattern of operations and the portion of the second collective pattern of operations, the one or more processors are configured to transmit data according to different ratios of direct connection bandwidth to indirect connection bandwidth for each collective pattern.

(21) The computing device of either one of (19) or (20): wherein, in adjusting the respective ratio of direct connection bandwidth to indirect connection bandwidth, the plurality of computing nodes is configured to: divert bandwidth from an indirect connection between computing nodes in different groups to bandwidth for an additional direct connection between computing nodes in the same group, wherein diverted bandwidth includes bandwidth for data passing from the computing device in a first group, through a first switch, and to a second computing device in the first group and including a direct connection to the first computing device.

(22) The computing device of (21): wherein diverted bandwidth includes bandwidth for data passing from the computing device in a first group, through a first switch, and to a second computing device in the first group and including a direct connection to the first computing device.

(23) The computing device of either one of (21) or (22): wherein, in diverting the bandwidth, the plurality of computing nodes is configured to divert, for at least one group of the plurality of groups, between 50% to 100% of indirect connection bandwidth to direct connection bandwidth.

(24) The computing device of any one of (14) through (23), wherein the computing is part of a group of computing nodes forming a hypercube topology.

(25) The computing device of any one of (24), wherein the group is of a plurality of groups of computing nodes and a plurality of switches forming at least part of one or more layers of a network arranged in a network topology including a plurality of layers.

(26) The computing device of (25): wherein the plurality of layers includes computing nodes and switches arranged in a fat-tree or folded-Clos network topology.

(27) The computing device of (26): wherein the layer formed at least partly by the plurality of the groups of computing nodes and the plurality of switches is the lowest layer of the fat-tree or folded-Clos network topology.

(28) The computing device of any one of (25) through (27): wherein the quantity of switches is equal to $n * 2^{n-1}$, where $n$ is the quantity of the plurality of dimensions.

(29) The computing device of any one of (1) through (28), wherein the one or more processors are configured to process the portion of the workload in accordance with a pipeline of collective patterns of operations, and wherein: in a first phase of the pipeline, the one or more processors are configured to execute at least a portion of a first collective pattern of operations within each group, in a second phase of the pipeline, the one or more processors are configured to execute at least a portion of a second collective pattern of operations between each group, and in executing at least the portion of the first collective pattern of operations and the portion of the second collective pattern of operations, the one or more processors are configured to transmit data according to different ratios of direct connection bandwidth to indirect connection bandwidth for each collective pattern.

(30) A method, that when performed by one or more computing nodes, causes the one or more computing nodes to perform the operations as in any one of (1) through (29)

(31) The method of (30), wherein the one or more computing nodes includes a computing device including one or more processors as in any one of (14) through (29).

(32) One or more computer-readable media storing instructions that are operable, when performed by one or more computing nodes, to perform the operations as in any one of (1) through (29).

(33) The computer-readable media of (32), wherein the computer-readable media is non-transitory.

(34) The computer-readable media of either one of (32) or (33), wherein the one or more computing nodes includes a computing device with one or more processors as in any one of (14) through (29).

Aspects of this disclosure can be implemented in digital electronic circuitry, in tangibly-embodied computer software or firmware, and/or in computer hardware, such as the structure disclosed herein, their structural equivalents, or combinations thereof. Aspects of this disclosure can further be implemented as one or more computer programs, such as one or more modules of computer program instructions encoded on a tangible non-transitory computer storage medium for execution by, or to control the operation of, one or more data processing apparatus. The computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, which is generated to encode information for transmission to suitable receiver apparatus for execution by a data processing apparatus.

The term "configured" is used herein in connection with systems and computer program components. For a system of one or more computers to be configured to perform particular operations or actions means that the system has installed software, firmware, hardware, or a combination thereof that cause the system to perform the operations or actions. For one or more computer programs to be configured to perform operations or actions means that the one or more programs include instructions that, when executed by one or more data processing apparatus, cause the apparatus to perform the operations or actions.

The term "data processing apparatus" refers to data processing hardware and encompasses various apparatus, devices, and machines for processing data, including programmable processors, a computer, or combinations thereof. The data processing apparatus can include special purpose logic circuitry, such as a field programmable gate array (FPGA) or an application specific integrated circuit (ASIC), such as a Tensor Processing Unit (TPU). The data processing apparatus can include code that creates an execution environment for computer programs, such as code that constitutes processor firmware, a protocol stack, a database management system, an operating system, or combinations thereof.

The data processing apparatus can include special-purpose hardware accelerator units for implementing machine learning models to process common and compute-intensive parts of machine learning training or production, such as inference or workloads. Machine learning models can be implemented and deployed using one or more machine learning frameworks, such as static or dynamic computational graph frameworks.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a standalone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "engine" refers to a software-based system, subsystem, or process that is programmed to perform one or more specific functions. The engine can be implemented as one or more software modules or components or can be installed on one or more computers in one or more locations. A particular engine can have one or more computers dedicated thereto, or multiple engines can be installed and running on the same computer or computers.

The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers.

A computer or special purpose logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, a personal digital assistant (PDA), a mobile audio or video player, a game console, a Global Positioning System (GPS), or a portable storage device, e.g., a universal serial bus (USB) flash drive, as examples.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Aspects of the disclosure can be implemented in a computing system that includes a back-end component, e.g., as a data server, a middleware component, e.g., an application server, or a front-end component, e.g., a client computer having a graphical user interface, a web browser, or an app, or any combination thereof. The components of the system can be interconnected by any form or medium of digital data communication, such as a communication network. Examples of communication networks include a local area network (LAN) and a wide area network (WAN), e.g., the Internet.

The workload execution system 100 can include clients and servers. A client and server can be remote from each other and interact through a communication network. The relationship of client and server arises by virtue of the computer programs running on the respective computers and having a client-server relationship to each other. For example, a server can transmit data, e.g., an HTML page, to a client device, e.g., for purposes of displaying data to and receiving user input from a user interacting with the client device. Data generated at the client device, e.g., a result of the user interaction, can be received at the server from the client device.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

**Claims**

1. A system, comprising:

   a plurality of computing nodes at least partially forming a plurality of groups, wherein a group of the plurality of groups is arranged in a network topology comprising a plurality of dimensions, a computing node in the group comprising one or more direct connections to at least one other computing node in the group,
   for each dimension of the plurality of dimensions, a plurality of switches, the computing node connected to a quantity of switches larger than or equal to the quantity of dimensions, wherein each switch of the plurality of switches comprises one or more indirect connections between at least one computing node of the group along the dimension to another computing node along the dimension of a another group of computing nodes, and wherein the plurality of computing nodes is configured to:

      receive a workload; and
      process the workload using a combination of direct connections and indirect connections of the plurality of groups of computing nodes and the plurality of switches.

2. The system of claim 1,

   wherein, in processing the workload, one or more computing nodes of the plurality of computing nodes are configured to determine a ratio of direct connection bandwidth to indirect connection bandwidth used to process the received workload based on a traffic pattern associated with the received workload;
   wherein, optionally, the workload is a machine learning workload, and the traffic pattern associated with the machine learning workload corresponds to a collective pattern of operations for implementing at least one of a form of model or data parallelism on input data or data at least partially specifying a machine learning model.

3. The system of one of claims 1 to 2,
   wherein one or more computing nodes of the plurality of computing nodes are configured to adjust a respective ratio of direct connection bandwidth to indirect connection bandwidth based on one or more respective collective patterns of operations for executing the workload.

4. The system of claim 3,

   wherein the plurality of computing nodes of the system are configured to process the workload in accordance with a pipeline of collective patterns of operations, and
   wherein:

in a first phase of the pipeline, the one or more computing nodes of the plurality of computing nodes execute a first collective pattern of operations within each group,

in a second phase of the pipeline, the one or more computing nodes of the plurality of computing nodes execute a second collective pattern of operations between each group, and

in executing the first collective pattern of operations and the second collective pattern of operations, the plurality of computing nodes is configured to transmit data according to different ratios of direct connection bandwidth to indirect connection bandwidth for each collective pattern.

5. The system of claim 3 or 4, wherein, in adjusting the respective ratio of direct connection bandwidth to indirect connection bandwidth, the plurality of computing nodes is configured to:

divert bandwidth from an indirect connection between computing nodes in different groups to bandwidth for an additional direct connection between computing nodes in the same group;

wherein diverted bandwidth comprises, optionally, bandwidth for data passing from a first computing node in a first group, through a first switch, and to a second computing node in the first group and comprising a direct connection to the first computing node; and.

wherein optionally, in diverting the bandwidth, the plurality of computing nodes is configured to divert, for at least one group of the plurality of groups, between 50% to 100% of indirect connection bandwidth to direct connection bandwidth.

6. The system of one of claims 1 to 5, wherein each group of computing nodes forms a hypercube topology.

7. The system of one of claims 1 to 6, wherein the plurality of groups of computing nodes and the plurality of switches form at least part of one or more layers of a network arranged in a network topology comprising a plurality of layers.

8. The system of claim 7,

wherein the plurality of layers comprises computing nodes and switches arranged in a fat-tree or folded-Clos network topology; and

wherein, optionally, the layer formed at least partly by the plurality of the groups of computing nodes and the plurality of switches is the lowest layer of the fat-tree or folded-Clos network topology.

9. The system of one of claims 1 to 8, wherein the quantity of switches is equal to $n * 2^{n-1}$, where $n$ is the quantity of the plurality of dimensions.

10. A computing device, comprising:

memory,

a plurality of connections, comprising one or more direct connections to one or more other computing devices of a group comprising the computing device and arranged in a network topology, and one or more indirect connections to one or more network switches, wherein the quantity of direct connections and the quantity of indirect connections are larger than or equal to the number of dimensions of the network topology, and

one or more processors configured to:

receive a portion of a workload; and

process the portion of the workload using a combination of bandwidth from the one or more direct connections and one or more indirect connections.

11. The computing device of claim 10, wherein the one or more processors are further configured to:

receive input comprising a ratio of direct bandwidth to indirect bandwidth used to process the receive portion of the workload, the ratio based on a traffic pattern associated with the received portion of the workload; and

process the portion of the workload using a combination of bandwidth from the one or more direct connections and the one or more indirect connections, in accordance with the received ratio.

12. The computing device of claim 11, wherein the one or more processors are further configured to:

receive a portion of a second workload different from the portion of the workload;

receive a second ratio of direct bandwidth to indirect bandwidth different from the received ratio; and
process the portion of the second workload using a combination of bandwidth from the one or more direct connections and the one or more indirect connections, in accordance with the second ratio.

13. The computing device of claim 11, wherein, in processing the portion of the second workload in accordance with the second ratio, the one or more processors are configured to:

divert bandwidth from an indirect connection between computing nodes in different groups to bandwidth for an additional direct connection between computing nodes in the same group.
wherein diverted bandwidth optionally comprises bandwidth for data passing from the computing device in a first group, through a first switch, and to a second computing device in the first group and comprising a direct connection to the first computing device.

14. The computing device of claim 10 to 13,

wherein the one or more processors are configured to process the portion of the workload in accordance with a pipeline of collective patterns of operations, and
wherein:

in a first phase of the pipeline, the one or more processors are configured to execute at least a portion of a first collective pattern of operations within each group,
in a second phase of the pipeline, the one or more processors are configured to execute at least a portion of a second collective pattern of operations between each group, and
in executing at least the portion of the first collective pattern of operations and the portion of the second collective pattern of operations, the one or more processors are configured to transmit data according to different ratios of direct connection bandwidth to indirect connection bandwidth for each collective pattern.

15. A method, comprising:

receiving, by a plurality of computing nodes and a plurality of switches, a workload, wherein:

the plurality of computing nodes at least partially forming a plurality of groups, a group of the plurality of groups is arranged in a network topology comprising a plurality of dimensions,
a computing node in the group comprising one or more direct connections to at least one other computing node in the group,
for each dimension of the plurality of dimensions, the computing node is connected to a quantity of switches larger than or equal to the quantity of dimensions, and
each switch of the plurality of switches comprises one or more indirect connections between at least one computing node of the group along the dimension to another computing node along the dimension of a another group of computing node; and

processing, by the plurality of computing nodes and the plurality of switches, the workload using a combination of direct connections and indirect connections of the plurality of groups of computing nodes and the plurality of switches.

Result Data
125

Workload Data
115

User Computing Device
120

Hybrid Network Topology
102

Computing Network
101

Scheduling Engine
110

Workload Execution System
100

FIG. 1

FIG. 2

Y Switch 1*

X Switch *0

10 11

00 01

X Switch *1

Y Switch 0*

FIG. 3B

Y Switch 1*

X Switch *0

10 11

00 01

X Switch *1

Y Switch 0*

FIG. 3A

FIG. 4A

FIG. 4B

FIG. 4C

EP 4 614 937 A1

FIG. 5X

FIG. 5Y

FIG. 5Z

FIG. 6

700

Receive, by a plurality of computing nodes and a plurality of switches, a workload.

710

Process, by the plurality of computing nodes and the plurality of switches, the workload using a combination of direct connections and indirect connections of the plurality of groups of computing nodes and the plurality of switches.

720

FIG. 7

800

In a first phase of the pipeline, execute a first collective pattern of operations within each group — 810

In a second phase of the pipeline, execute a second collective pattern of operations between each group — 820

In executing the first collective pattern of operations and the second collective pattern of operations, transmit data according to different ratios of direct connection bandwidth to indirect connection bandwidth for each collective pattern — 830

FIG. 8

FIG. 9

FIG. 10

Europäisches
Patentamt

European
Patent Office

Office européen
des brevets

## EUROPEAN SEARCH REPORT

**Application Number**

EP 25 16 1873

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NILS BLACH ET AL: "A High-Performance Design, Implementation, Deployment, and Evaluation of The Slim Fly Network", ARXIV.ORG, CORNELL UNIVERSITY LIBRARY, 201 OLIN LIBRARY CORNELL UNIVERSITY ITHACA, NY 14853, 5 October 2023 (2023-10-05), XP091631837, * paragraph [Section2"NetworkModel&Topologies"] * ----- | 1-15 | INV. H04L47/125 H04L47/17 |
| A | US 2020/382377 A1 (COHEN JESSICA [US]) 3 December 2020 (2020-12-03) * paragraph [0042] - paragraph [0050] * ----- | 1-15 | |
| | | | **TECHNICAL FIELDS SEARCHED (IPC)** |
| | | | H04L |

The present search report has been drawn up for all claims

| Place of search | Date of completion of the search | Examiner |
|---|---|---|
| The Hague | 9 July 2025 | Ciurel, Cristian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 1873

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2025

| Patent document cited in search report | Publication date | Patent family member(s) | Publication date |
|---|---|---|---|
| US 2020382377 A1 | 03-12-2020 | NONE | |